# EUROPÄISCHE PATENTSCHRIFT

(11) **EP 4 286 841 B1**
(45) Veröffentlichungstag und Bekanntmachung des Hinweises auf die Patenterteilung: **08.04.2026**
(21) Anmeldenummer: 22176172.9
(22) Anmeldetag: 30.05.2022
(51) Int. Cl.: G01N 29/00

(54) **WÄRMETAUSCHER MIT ULTRASCHALLSENSOR ZUR BESTIMMUNG EINER ROHRWANDDICKE EINES WÄRMEÜBERTRAGUNGSROHRES DES WÄRMETAUSCHERS UND VERFAHREN ZUM BETREIBEN EINES SOLCHEN WÄRMETAUSCHERS**
HEAT EXCHANGER WITH ULTRASONIC SENSOR FOR DETERMINING A THICKNESS OF A HEAT EXCHANGER TUBE OF THE HEAT EXCHANGER AND METHOD FOR OPERATING SUCH A HEAT EXCHANGER
ÉCHANGEUR DE CHALEUR POURVU DE CAPTEUR À ULTRASONS DESTINÉ À LA DÉTERMINATION DE L'ÉPAISSEUR DE PAROI DE TUBE D'UN TUBE DE TRANSFERT DE CHALEUR DE L'ÉCHANGEUR DE CHALEUR ET PROCÉDÉ PERMETTANT DE FAIRE FONCTIONNER UN TEL ÉCHANGEUR DE CHALEUR

(43) Veröffentlichungstag der Anmeldung: 06.12.2023
(73) Patentinhaber: Schoeller-Bleckmann Nitec GmbH, 2630 Ternitz (AT)
(72) Erfinder: Eisl, Daniel, 5330 Fuschl am See (AT); Prohaska, Manuel, 8793 Trofaiach (AT); Gavrilovic-Wohlmuther, Aleksandra, 2823 Pitten (AT)
(74) Vertreter: Wirnsberger & Lerchbaum Patentanwälte OG

(56) Entgegenhaltungen:
- EP-A1- 3 569 305
- US-A- 4 872 347
- US-A1- 2020 388 410
- US-B2- 7 647 829

## Beschreibung

Die Erfindung betrifft einen Wärmetauscher, insbesondere Hochdruckwärmetauscher zur Harnstoffsynthese, aufweisend mehrere Wärmeübertragungsrohre zum Transport eines ersten Fluids, um über die Wärmeübertragungsrohre Wärme zwischen dem ersten Fluid und einem zweiten Fluid zu übertragen. Die Erfindung betrifft einen Wärmetauscher nach dem Oberbegriff des Anspruchs 1. Solch ein Wärmetauscher ist aus US2020/388410A bekannt.

Weiter betrifft die Erfindung ein Verfahren zum Betreiben eines Wärmetauschers.

Aus dem Stand der Technik ist es bekannt, einen Wärmetauscher einzusetzen, um Wärmeenergie zwischen einem ersten Fluidstrom und einem zweiten Fluidstrom auszutauschen. Häufig weist der Wärmetauscher mehrere Wärmeübertragungsrohre zum Transport des ersten Fluidstroms auf, um über die Wärmeübertragungsrohre Wärme an einen die Wärmeübertragungsrohre umströmenden zweiten Fluidstrom zu übertragen oder von diesem aufzunehmen. Im Rahmen einer Harnstoffsynthese werden üblicherweise Wärmetauscher eingesetzt, bei welchen der erste bzw. zweite Fluidstrom einen hohen Druck, in der Regel von mehr als 30 bar, und eine hohe Temperatur, in der Regel von mehr als 80°C, aufweist. Dabei ist der Transport des ersten Fluidstroms durch die Wärmeübertragungsrohre häufig mit einer, insbesondere korrosiven und/oder erosiven, Abtragung von Rohrwandmaterial der Wärmeübertragungsrohre oder einer Bildung von Ablagerungen jeweils in einem Inneren der Wärmeübertragungsrohre verbunden, sodass sich eine Rohrwanddicke der Wärmeübertragungsrohre im Betrieb des Wärmetauschers ändert, in der Regel verkleinert. Eine Beeinträchtigung einer Rohrwandintegrität der Wärmeübertragungsrohre kann problematisch für eine Sicherheit eines Betriebs des Wärmetauschers sein. Üblicherweise ist es deshalb erforderlich, basierend auf zeitlichen Wartungsintervallen den Wärmetauscher regelmäßig abzuschalten und Rohrwanddicken der Wärmeübertragungsrohre zu vermessen.

Hierzu ist es üblich in einem Nicht-Betriebszustand des Wärmetauschers eine Messsonde in das jeweilige Wärmeübertragungsrohr einzuführen, um einen Innenradius bzw. eine Rohrwanddicke des Wärmeübertragungsrohres zu bestimmen. Bekannt sind Messsonden, welche einen Ultraschallsensor, einen optischen Sensor oder einen Wirbelstromsensor aufweisen, um die Rohrwanddicke zu bestimmen.

Im Besonderen bei Wärmetauschern, welche mit Drücken von mehr als 30 bar und hohen Temperaturen von mehr als 80°C des ersten und/oder zweiten Fluidstroms arbeiten, ist eine derartige Unterbrechung des Betriebs zur Bestimmung von Rohrwanddicken der Wärmeübertragungsrohre in der Regel aufwendig bzw. mit hohen Kosten verbunden.

Hier setzt die Erfindung an. Aufgabe der Erfindung ist es, einen Wärmetauscher der eingangs genannten Art anzugeben, welcher eine optimierte Einsatzfähigkeit aufweist, insbesondere einen optimierten Betrieb ermöglicht.

Außerdem ist es ein Ziel der Erfindung, ein Verfahren zum Betreiben eines Wärmetauschers anzugeben, welches einen optimierten Einsatz bzw. Betrieb des Wärmetauschers ermöglicht.

Die Aufgabe wird erfindungsgemäß dadurch gelöst, dass bei einem Wärmetauscher der eingangs genannten Art, an einem oder mehreren der Wärmeübertragungsrohre jeweils ein Ultraschallsensor zur In-situ-Bestimmung von Rohrwanddicken der Wärmeübertragungsrohre angeordnet ist, wobei der jeweilige Ultraschallsensor für einen Einsatzdruck von mehr als 30 bar und/oder eine Einsatztemperatur von mehr als 80°C ausgebildet ist, wobei der jeweilige Ultraschallsensor zur Datenübertragung mit einer elektronischen Datenerfassungseinheit verbunden ist, um während eines Betriebs des Wärmetauschers Messdaten an die elektronische Datenerfassungseinheit zu übertragen.

Grundlage der Erfindung ist die Idee, eine Einsatzfähigkeit von Wärmetauschern, welche für einen hohen Betriebsdruck und/oder hohe Betriebstemperatur des ersten und/oder zweiten Fluids ausgebildet sind, zu verbessern, indem eine Rohrwanddicke von Wärmeübertragungsrohren des Wärmetauschers in situ, also lokal am Wärmetauscher bzw. den Wärmeübertragungsrohren, und üblicherweise in operando, also während eines Betriebs des Wärmetauschers, bestimmt wird. Dadurch kann ein Betrieb, insbesondere eine Prozessführung, und/oder eine Wartung des Wärmetauschers abhängig von der bestimmten Rohrwanddicke erfolgen. Im Besonderen ist es nicht erforderlich, einen Betrieb des Wärmetauschers zu unterbrechen, um die Rohrwanddicke zu bestimmen.

Betrieb des Wärmetauschers bezeichnet einen Zustand, in dem das erste Fluid durch die Wärmeübertragungsrohre geleitet wird, um Wärme mit dem zweiten Fluid über die Wärmeübertragungsrohre auszutauschen. Ein hoher Betriebsdruck bzw. eine hohe Betriebstemperatur bezeichnen einen Betriebsdruck des ersten Fluids und/oder des zweiten Fluids größer als 30 bar bzw. eine Betriebstemperatur größer als 80°C. Im Besonderen ist der Betriebsdruck zwischen 30 bar und 200 bar, vorzugsweise etwa 180 bar, und/oder die Betriebstemperatur zwischen 80°C und 300°C, vorzugsweise etwa 230°C. In der Regel weist das erste und/oder zweite Fluid im Betrieb des Wärmetauschers einen solchen Betriebsdruck bzw. eine solche Betriebstemperatur auf bzw. ist der Wärmetauscher für einen solchen Betrieb ausgebildet. Entsprechend ist es günstig, wenn der jeweilige Ultraschallsensor einen Einsatzdruck bzw. eine Einsatztemperatur entsprechend dem Betriebsdruck bzw. der Betriebstemperatur aufweist. Der Wärmetauscher ist vorzugsweise ein Hochdruckwärmetauscher.

Besonders günstig ist es, wenn der Wärmetauscher ein Stripper zur Durchführung einer Strippung ist. Günstig ist es, wenn der Stripper zur Harnstoffsynthese eingesetzt wird. Der Stripper kann ausgebildet sein, um, in der Regel innerhalb der Wärmeübertragungsrohre, mit Strippung Harnstoff zu synthetisieren.

Üblicherweise wird der jeweilige Ultraschallsensor derart am jeweiligen Wärmeübertragungsrohr angeordnet, dass sich der Ultraschallsensor im Betrieb des Wärmetauschers in einem der Fluids, vorzugsweise im zweiten Fluid, befindet. Bewährt hat es sich, wenn der jeweilige Ultraschallsensor an einer Außenseite des Wärmeübertragungsrohres, üblicherweise im Betrieb des Wärmetauschers im zweiten Fluid, angeordnet ist. In der Regel weist im Betrieb des Wärmetauschers das zweite Fluid vorgenannten Betriebsdruck und/oder vorgenannte Betriebstemperatur auf bzw. ist der Wärmetauscher für einen entsprechenden Betrieb ausgebildet. Der Ultraschallsensor ist üblicherweise an einer Rohrwand des jeweiligen Wärmeübertragungsrohres angeordnet, um mit Aussenden eines Ultraschallsignals in die Rohrwand die Rohrwanddicke zu bestimmen. In der Regel kann mit dem Ultraschallsensor ein Ultraschallsignal ausgesendet und ein reflektiertes Ultraschallsignal detektiert werden. Der Wärmetauscher weist üblicherweise ein, vorzugsweise mehrere, solche Ultraschallsensoren auf. Üblicherweise ist der Wärmetauscher bzw. Ultraschallsensor zur In-situ-Bestimmung und In-operando-Bestimmung einer Rohrwanddicke des jeweiligen Wärmeübertragungsrohres ausgebildet bzw. wird eine Rohwanddicke des jeweiligen Wärmeübertragungsrohres in situ und in operando mit dem Ultraschallsensor bestimmt.

Zweckmäßig ist es, wenn der jeweilige Ultraschallsensor zur Datenübertragung mit einer elektronischen Datenerfassungseinheit verbunden ist. Dadurch können während eines Betriebs des Wärmetauschers Messdaten vom Ultraschallsensor an die Datenerfassungseinheit übertragen werden. Zur Datenübertragung sind der Ultraschallsensor und die Datenerfassungseinheit üblicherweise mit einer, insbesondere elektrischen, Signalleitung verbunden. Bevorzugt ist die Signalleitung für eine symmetrische Signalübertragung ausgebildet. Die Signalleitung ist üblicherweise kabelförmig ausgebildet. Vorzugsweise ist die Signalleitung ein Koaxialkabel. Es können mehrere elektronische Datenerfassungseinheiten vorgesehen sein, wobei verschiedene Ultraschallsensoren mit unterschiedlichen der elektronischen Datenerfassungseinheiten zur Datenübertragung verbunden sein können. Mehrere der Ultraschallsensoren können mit derselben elektronischen Datenerfassungseinheit zur Datenübertragung verbunden sein. Es kann vorgesehen sein, dass der jeweilige Ultraschallsensor mit der elektronischen Datenerfassungseinheit, mit welcher der Ultraschallsensor zur Datenübertragung verbunden ist, gesteuert wird.

Die Wärmeübertragungsrohre sind üblicherweise zur Leitung des ersten Fluids ausgebildet, um durch Rohrwände der Wärmeübertragungsrohre hindurch Wärme zwischen dem ersten Fluid und dem zweiten Fluid zu übertragen. Vorzugsweise ist vorgesehen, dass im Betrieb des Wärmetauschers das zweite Fluid in, insbesondere unmittelbaren, Kontakt mit den Wärmeübertragungsrohren bzw. den Rohrwänden steht. Das erste Fluid ist üblicherweise ein im Betrieb des Wärmetauschers durch die Wärmeübertragungsrohre geleiteter erster Fluidstrom. Das zweite Fluid kann im Betrieb des Wärmetauschers ein zweiter Fluidstrom sein, welcher in der Regel die Wärmeübertragungsrohre umströmt. Das zweite Fluid weist üblicherweise einen Druck von mehr als 30 bar, insbesondere zwischen 30 bar und 200 bar, vorzugsweise etwa 180 bar, auf und/oder eine Temperatur von mehr als 80°C, insbesondere zwischen 80°C und 300°C, vorzugsweise etwa 230°C, auf. Das erste Fluid kann einen höheren Druck und/oder eine höhere Temperatur als das zweite Fluid aufweisen.

Der Wärmetauscher weist üblicherweise eine Fluidkammer zur Aufnahme des zweiten Fluids auf, wobei die Wärmeübertragungsrohre innerhalb der Fluidkammer verlaufen. Die Fluidkammer bildet üblicherweise einen Fluidkammerhohlraum zwischen Fluidkammerwänden der Fluidkammer und den Wärmeübertragungsrohren, um für eine Wärmeübertragung zwischen dem ersten Fluid und dem zweiten Fluid das zweite Fluid mit dem Fluidkammerhohlraum aufzunehmen. Die Wärmeübertragungsrohre verlaufen üblicherweise durch den Fluidkammerhohlraum hindurch. In der Regel ist vorgesehen, dass im Betrieb des Wärmetauschers das zweite Fluid durch den Fluidkammerhohlraum geleitet wird, insbesondere derart, dass das zweite Fluid die Wärmeübertragungsrohre umströmt. Zweckmäßig kann der Fluidkammerhohlraum in Form eines oder mehrerer Kanäle ausgebildet sein, um im Betrieb des Wärmetauschers das zweite Fluid mit den Kanälen zu leiten. Die Fluidkammer weist üblicherweise zumindest einen Fluidkammereingang und zumindest einen Fluidkammerausgang auf, um über den Fluidkammereingang das zweite Fluid in die Fluidkammer, insbesondere den Fluidkammerhohlraum, zu leiten und über den Fluidkammerausgang das zweite Fluid, in der Regel nach erfolgter Wärmeübertragung zwischen dem ersten Fluid und zweiten Fluid, wieder aus der Fluidkammer, insbesondere dem Fluidkammerhohlraum, abzuführen. Die Fluidkammer ist üblicherweise mit, insbesondere aus, Metall, vorzugsweise einer Eisenlegierung, besonders bevorzugt einer Stahllegierung, beispielsweise austenitischem Stahl, gebildet.

In der Regel sind Wärmeübertragungsrohre zumindest abschnittsweise voneinander beabstandet, sodass im Betrieb des Wärmetauschers das zweite Fluid für eine Wärmeübertragung mit den Wärmeübertragungsrohren zwischen den Wärmeübertragungsrohren hindurchströmen kann. Dies gilt insbesondere innerhalb der Fluidkammer bzw. dessen Fluidkammerhohlraum.

Üblicherweise sind das erste Fluid bzw. das zweite Fluid flüssig und/oder gasförmig ausgebildet. Beispielsweise kann das erste Fluid bzw. das zweite Fluid mit, insbesondere aus, flüssigem und gasförmigem Wasser gebildet sein. Es kann vorgesehen sein, dass das erste Fluid bzw. zweite Fluid mit, insbesondere aus, einem flüssigen Medium und einem gasförmigen Medium gebildet ist, wobei im Betrieb des Wärmetauschers das flüssige Medium und das gasförmige Medium des jeweiligen Fluids in einander entgegengesetzten Richtungen, üblicherweise einander kontaktierend, durch den Wärmetauscher strömen. Beispielsweise kann das erste Fluid mit einem flüssigen Medium und einem gasförmigen Medium gebildet sein, wobei im Betrieb des Wärmetauschers im jeweiligen Wärmeübertragungsrohr die Medien in einander entgegengesetzten Richtungen, insbesondere einander kontaktierend, durch das Wärmeübertragungsrohr strömen.

Die Wärmeübertragungsrohre erstrecken sich üblicherweise zwischen einer ersten Rohrplatte und einer zweiten Rohrplatte, wobei die Rohrplatten den Fluidkammerhohlraum zur Aufnahme des zweiten Fluids begrenzen, wobei die Wärmeübertragungsrohre in Durchgangsöffnungen der jeweiligen Rohrplatte münden oder durch die Durchgangsöffnungen hindurchgeführt sind. Üblicherweise wird ein durch Durchgangsöffnungen einer der Platten eingeleitetes Fluid durch die Wärmeübertragungsrohre zu den Durchgangsöffnungen der anderen Rohrplatte geleitet. In der Regel sind die Wärmeübertragungsrohre fluiddicht mit den Rohrplatten verbunden. Üblicherweise ist die jeweilige Rohrplatte plattenförmig mit mehreren quer, insbesondere orthogonal, zu einer Längserstreckung der Rohrplatte orientierten Durchflusskanälen ausgebildet, welche Durchflusskanäle die jeweilige Durchgangsöffnung bilden. Die Rohrplatten können als Teile von Fluidkammerwänden der Fluidkammer ausgebildet sein. Der Wärmetauscher weist üblicherweise zumindest eine erste und zumindest eine zweite solche Rohrplatte auf. Die Rohrplatten sind üblicherweise mit, insbesondere aus, Metall, vorzugsweise einer Eisenlegierung, besonders bevorzugt einer Stahllegierung, beispielsweise austenitischem Stahl, gebildet.

In der Fluidkammer können ein oder mehrere Fluidführungsflächen vorhanden sein, um mit den Fluidführungsflächen einen Strömungsweg des zweiten Fluids zu definieren. Die jeweilige Fluidführungsfläche ist üblicherweise ausgebildet, einen Fluiddurchfluss des zweiten Fluids zwischen den Wärmeübertragungsrohren abschnittsweise zu unterbinden. Die Fluidführungsflächen können einen Strömungsweg mit mehreren Umlenkkurven definieren, entlang welchem das zweite Fluid vom Fluidkammereingang zum Fluidkammerausgang geführt wird. Beispielsweise kann der Strömungsweg mäanderförmig sein. Üblicherweise verlaufen mehrere der Wärmeübertragungsrohre durch die jeweilige Führungsfläche hindurch. In der Regel sind mehrere die Wärmeübertragungsrohre querende voneinander beabstandete Führungsflächen vorgesehen. Die jeweilige Fluidführungsfläche ist üblicherweise quer, insbesondere orthogonal, zu einer Längserstreckung der Wärmeübertragungsrohre orientiert. In der Regel sind mehrere in Längsrichtung der Wärmeübertragungsrohre voneinander beabstandete Fluidführungsflächen vorgesehen. Üblicherweise wird mit der jeweiligen Fluidführungsfläche ein Zwischenraum zwischen mehreren der Wärmeübertragungsrohre im Wesentlichen verschlossen, um einen Durchfluss des zweiten Fluids durch den Zwischenraum zu unterbinden. Die jeweilige Fluidführungsfläche kann ausgebildet sein, in einem Querschnitt durch die Fluidkammer eine Mehrheit der Zwischenräume zwischen den Wärmeübertragungsrohren für einen Durchfluss des zweiten Fluids zu verschließen. Die Fluidführungsflächen können mit in der Fluidkammer angeordneten Führungswänden gebildet sein. Die Fluidführungsflächen sind in der Regel plattenförmig ausgebildet. Die Fluidkammer weist in der Regel ein oder mehrere solche Führungsflächen auf.

Üblicherweise sind mehrere der Wärmeübertragungsrohre durch Stabilisierungselemente miteinander verbunden, um die Wärmeübertragungsrohre im Betrieb des Wärmetauschers zu stabilisieren. Das jeweilige Stabilisierungselement kann plattenförmig ausgebildet sein, wobei eine Längserstreckung des Stabilisierungselementes in der Regel quer, insbesondere orthogonal, zu einer Längserstreckung der durch das Stabilisierungselement verbundenen Wärmeübertragungsrohre, orientiert ist. Üblicherweise verlaufen die Wärmeübertragungsrohre durch das Stabilisierungselement hindurch. Die Stabilisierungselemente werden fachüblich als Baffles bezeichnet. In der Regel sind entlang einer Längserstreckung der Wärmeübertragungsrohre mehrere voneinander beabstandete die Wärmeübertragungsrohre miteinander verbindende Stabilisierungselemente vorgesehen. Im Besonderen können die Fluidführungsflächen durch die Stabilisierungselemente gebildet sein. Die Stabilisierungselemente können dann sowohl zur Stabilisierung der Wärmeübertragungsrohre als auch Festlegung eines Strömungsweges des zweiten Fluids dienen.

Günstig ist es, wenn der jeweilige Ultraschallsensor in einem Anordnungsbereich am jeweiligen Wärmeübertragungsrohr angeordnet ist, wobei der Anordnungsbereich, insbesondere in Durchströmungsrichtung des ersten Fluids durch das Wärmeübertragungsrohr, durch ein erstes Drittel einer Längserstreckung des Wärmeübertragungsrohres innerhalb der Fluidkammer bzw. des Fluidkammerhohlraums definiert ist. Der Anordnungsbereich des jeweiligen Wärmeübertragungsrohres erstreckt sich, insbesondere in Durchströmungsrichtung des ersten Fluids, üblicherweise ausgehend von einem Eintritt des Wärmeübertragungsrohres in die Fluidkammer entlang einer Längserstreckung des Wärmeübertragungsrohres mit einer Länge von 30 %, insbesondere 20 %, bevorzugt 10 % einer Längserstreckung des Wärmeübertragungsrohres innerhalb der Fluidkammer bzw. dem Fluidkammerhohlraum. Es hat sich gezeigt, dass in der Regel in diesem Anordnungsbereich des jeweiligen Wärmeübertragungsrohres eine Materialabtragung bzw. ein Verschleiß des Wärmeübertragungsrohres besonders groß ist, weshalb es günstig ist, die Ultraschallsensoren in diesem Bereich zu positionieren.

Vorteilhaft ist es, wenn die elektronische Datenerfassungseinheit außerhalb der Fluidkammer, insbesondere des Fluidkammerhohlraums, angeordnet ist. Dadurch ist die elektronische Datenerfassungseinheit vor Belastungen, insbesondere Druckbelastungen und/oder Temperaturbelastungen, im Besonderen des ersten bzw. zweiten Fluids, geschützt. Die Datenerfassungseinheit weist üblicherweise einen Mikrocontroller auf bzw. kann als Computer ausgebildet sein. Die elektronische Datenerfassungseinheit ist in der Regel ausgebildet, Messdaten, meist über ein oder mehrere Hardwareschnittstellen, von einem oder mehreren der Ultraschallsensoren zu empfangen. Die elektronische Datenerfassungseinheit kann ausgebildet sein, die Messdaten zu verarbeiten, zu sammeln und/oder weiterzuleiten. Beispielsweise können Messdaten von der elektronischen Datenerfassungseinheit an eine elektronische Datenzentraleinheit weitergeleitet werden, welche elektronische Datenzentraleinheit ausgebildet sein kann, Daten, insbesondere aufbereitet, auszugeben und/oder einem Benutzer darzustellen. Üblicherweise weist der Wärmetauscher eine oder mehrere elektronische Datenerfassungseinheiten auf.

Bewährt hat es sich, wenn der jeweilige Ultraschallsensor zur Datenübertragung über die Signalleitung mit der Datenerfassungseinheit verbunden ist, wobei die Signalleitung, insbesondere in der Fluidkammer, zumindest abschnittsweise innerhalb eines Schutzrohres, vorzugsweise gebildet aus Metall, verläuft, um die Signalleitung, insbesondere vor einer Belastung durch das erste bzw. zweite Fluid, zu schützen. Vorteilhaft ist es, wenn das Schutzrohr ein vom ersten Fluid und zweiten Fluid separiertes Volumen bildet, innerhalb welchem, insbesondere durch welches hindurch, die Signalleitung verläuft. Zweckmäßig kann das Schutzrohr entsprechend mit dem Ultraschallsensor verbunden sein. Das Volumen ist üblicherweise vom Fluidkammerhohlraum separiert. Üblicherweise verläuft die Signalleitung in der Fluidkammer innerhalb des Schutzrohres. Das Schutzrohr erstreckt sich in der Regel vom jeweiligen Ultraschallsensor bis zu einer Fluidkammerwand der Fluidkammer, insbesondere des Fluidkammerholraumes. Vorteilhaft ist es, wenn das Schutzrohr derart mit einem Sensorgehäuse des jeweiligen Ultraschallsensors verbunden ist, dass das Schutzrohr, bevorzugt gemeinsam mit dem Sensorgehäuse, ein im Betrieb des Wärmetauschers vom ersten Fluid und zweiten Fluid bzw. ein vom Fluidkammerhohlraum separiertes Volumen, in welchem die Signalleitung verläuft, definiert. Das Schutzrohr ist üblicherweise fluiddicht mit dem jeweiligen Ultraschallsensor, insbesondere dessen Sensorgehäuse, verbunden. Das Schutzrohr kann fluiddicht mit einer Fluidkammerwand der Fluidkammer, insbesondere des Fluidkammerhohlraumes, verbunden oder durch die Fluidkammerwand hindurchgeführt sein. Die Fluidkammer kann eine Signalleitungsdurchführung aufweisen, mit welcher die Signalleitung durch eine Fluidkammerwand der Fluidkammer hindurchgeführt ist, insbesondere aus der Fluidkammer hinausgeführt ist. Zweckmäßig kann das Schutzrohr über die Signalleitungsdurchführung mit der Fluidkammerwand fluiddicht verbunden sein. Üblicherweise erstreckt sich im Wesentlichen die gesamte Länge der Signalleitung zwischen dem Ultraschallsensor und der Fluidkammerwand oder Signalleitungsdurchführung innerhalb des Schutzrohres.

Das Schutzrohr kann, üblicherweise fluiddicht, mit dem Ultraschallsensor, insbesondere dessen Sensorgehäuse, kraftschlüssig, formschlüssig und/oder stoffschlüssig verbunden sein. Das Schutzrohr kann, üblicherweise fluiddicht, mit der Signalleitungsdurchführung oder einer Fluidkammerwand kraftschlüssig, formschlüssig und/oder stoffschlüssig verbunden sein. Bevorzugt ist vorgesehen, dass einerseits das Schutzrohr mit dem jeweiligen Ultraschallsensor, insbesondere dessen Sensorgehäuse, stoffschlüssig verbunden, insbesondere verschweißt, ist und/oder andererseits das Schutzrohr an eine Signalleitungsdurchführung, vorzugsweise kraftschlüssig und/oder stoffschlüssig, mittels einer Keilschraubverbindung anschließt, mit welcher die Signalleitung durch die Fluidkammer hindurchgeführt ist. Die Schweißverbindung ermöglicht eine belastbare und platzreduzierte Verbindung am Ultraschallsensor. An der Fluidkammerwand bzw. an der Signalleitungsdurchführung ist ein Platzerfordernis der Verbindung des Schutzrohres üblicherweise weniger relevant, weshalb eine Keilschraubverbindung praktikabel ist. Alternativ kann das Schutzrohr aber auch mit der Fluidkammerwand bzw. Signalleitungsdurchführung stoffschlüssig verbunden sein, insbesondere verschweißt sein. Vorzugsweise weist der Wärmetauscher ein oder mehrere solche Schutzrohre auf. Insbesondere können mehrere mit unterschiedlichen der Ultraschallsensoren verbundenen Schutzrohre ein gemeinsames Volumen bildend miteinander verbunden sein, um die jeweiligen Signalleitungen durch das gemeinsame Volumen zu führen.

Das Schutzrohr ist üblicherweise mit, insbesondere aus, Metall gebildet. Vorzugsweise ist das Schutzrohr mit, insbesondere aus, einer Eisenlegierung, bevorzugt Stahllegierung, beispielsweise austenitischem Stahl, gebildet. Vorzugsweise kann auf diese Weise innerhalb des Schutzrohres bzw. innerhalb des Ultraschallsensors eine andere Atmosphäre, insbesondere Atmosphärenelementezusammensetzung, als in der Fluidkammer gebildet werden. Die Atmosphäre, insbesondere Atmosphärenelementezusammensetzung, innerhalb des Schutzrohres bzw. innerhalb des Ultraschallsensors kann im Wesentlichen einer Umgebungsatmosphäre des Wärmetauschers entsprechen.

Der jeweilige Ultraschallsensor ist üblicherweise ausgebildet, ein Ultraschallsignal auszusenden und ein, typischerweise an einer oder mehrerer Grenzflächen, reflektiertes Ultraschallsignal zu empfangen. Das Ultraschallsignal ist in der Regel eine Ultraschallwelle. Aus einem zeitlichen Abstand, insbesondere Vergleich, zwischen ausgesendeten bzw. empfangenden Ultraschallsignal kann ein Abstand der Grenzflächen bestimmt werden. Vorteilhaft kann mit dem Ultraschallsensor ein Ultraschallsignal in das jeweilige Wärmeübertragungsrohr, insbesondere dessen Rohrwand, ausgesendet und an Grenzflächen, insbesondere einer Außenwand und einer Innenwand des Wärmeübertragungsrohres, reflektierte Ultraschallsignale mit dem Ultraschallsensor empfangen werden, um eine Rohrwanddicke des Wärmeübertragungsrohres zu bestimmen. Der jeweilige Ultraschallsensor weist üblicherweise einen Piezokristall zum Aussenden des Ultraschallsignals bzw. Empfangen des reflektierten Ultraschallsignals auf. Der Piezokristall ist üblicherweise als Teil eines Piezoelementes ausgebildet. Ein Ansteuern des Piezokristalls bzw. Piezoelementes erfolgt üblicherweise über die Signalleitung. Günstig ist es, wenn der Piezokristall mit, insbesondere aus, einer Blei-Zirkonat-Titanat-Keramik (PZT-Keramik) gebildet ist. Der Piezokristall kann plattenförmig ausgebildet sein und in Senderichtung des Ultraschallsignals eine Dicke kleiner als 3 mm, insbesondere kleiner als 1 mm, bevorzugt kleiner als 0,5 mm, insbesondere bevorzugt zwischen 0,1 mm und 0,15 mm, aufweisen. Die Dicke ist in der Regel größer als 0,05 mm.

Der Ultraschallsensor ist erfindungsgemäß derart am Wärmeübertragungsrohr angeordnet, dass die Senderichtung des Ultraschallsignals quer, insbesondere im Wesentlichen orthogonal, zu einer Längserstreckung des Wärmeübertragungsrohres ist.

Für eine hohe Genauigkeit hat es sich bewährt, wenn im jeweiligen Ultraschallsensor ein Aussenden und ein Empfangen der Ultraschallsignale mit einem selben Piezokristall erfolgt. Üblicherweise wechselt eine Steuerung des Ultraschallsensors bzw. Piezokristalls zwischen einem Sendemodus, in welchem ein Ultraschallsignal mit dem Ultraschallsensor ausgesendet wird, und einem Empfangsmodus, in welchem ein reflektiertes Ultraschallsignal mit dem Ultraschallsensor detektiert werden kann. Zwischen dem Sendemodus und Empfangsmodus liegt üblicherweise eine Totzeit, in welcher kein reflektiertes Ultraschallsignal detektiert werden kann. Alternativ kann vorgesehen sein, dass der Ultraschallsensor mehrere Piezokristalle aufweist, wobei einer der Piezokristalle für ein Senden und ein anderer der Piezokristalle für ein Empfangen von Ultraschallsignalen ausgebildet ist. Bevorzugt ist es aber, wenn das Aussenden und Empfangen der Ultraschallsignale mit demselben Piezokristall erfolgt.

Üblicherweise umfasst der jeweilige Ultraschallsensor ein Dämpfungselement, einen Piezokristall und einen Vorlaufstreckenkörper. Das Dämpfungselement ist in der Regel mit dem Piezokristall gekoppelt und ausgebildet, mechanische Schwingungen des Piezokristalls zu dämpfen. Der Piezokristall liegt häufig am Dämpfungselement an. Der Vorlaufstreckenkörper ist in der Regel dem Piezokristall in Senderichtung eines Ultraschallsignals zum Wärmeübertragungsrohr hin nachgeordnet, um eine Reflexion eines mit dem Piezokristall ausgesendeten Ultraschallsignals an einer Rohrwand des Wärmeübertragungsrohres innerhalb der Totzeit zu vermeiden. Der Vorlaufstreckenkörper ist in der Regel aus einem gut ultraschallleitfähigen Material gebildet.

Günstig ist es, wenn im jeweiligen Ultraschallsensor das Dämpfungselement, der Piezokristall und der Vorlaufstreckenkörper mittels eines Federelementes aneinandergepresst sind. Auf diese Weise kann ein robuster und insbesondere dauerhafter Verbund auch bei hohem Einsatzdruck und/oder hoher Einsatztemperatur gewährleistet werden. Vorzugsweise kann dabei auf ein, häufig belastungsanfälliges, Verkleben von Dämpfungselement, Piezokristall und Vorlaufstrecke verzichtet werden.

Das Aneinanderpressen ist dabei üblicherweise mit einer elastischen Verformung des Federelementes entgegen einer Federkraft des Federelementes verbunden. Vorteilhaft ist es, wenn das Federelement mit einer Feder oder einer Anordnung von mehreren Federn, welche vorzugsweise in Reihenschaltung aneinandergekoppelt sind, gebildet ist. Die Feder ist vorzugsweise eine Tellerfeder. Das Federelement ist vorzugsweise im Ultraschallsensor in Senderichtung dem Dämpfungselement vorgeordnet.

Senderichtung bezeichnet üblicherweise jene Richtung, in welcher ein jeweiliger Ultraschallsensor ausgebildet ist, ein Ultraschallsignal, insbesondere hin zum Wärmeübertragungsrohr, auszusenden.

Günstig ist es, wenn das Dämpfungselement mit, insbesondere aus, einem porösem Titankörper, gebildet insbesondere mit gesintertem Titan, ausgebildet ist. Üblicherweise weist der Titankörper eine durchschnittliche Porengröße kleiner als 100 µm, insbesondere kleiner als 50 µm, bevorzugt zwischen 1 µm und 10 µm, besonders bevorzugt etwa 5 µm, auf. Dadurch kann ein robustes Ultraschallsignal erzeugt werden. Das Dämpfungselement weist in Senderichtung üblicherweise eine Dicke zwischen 1 mm und 5 mm, bevorzugt etwa 3 mm, auf.

Der Vorlaufstreckenkörper kann mit, insbesondere aus, Acrylglas oder einem Metall, insbesondere Eisen, bevorzugt Stahl, gebildet sein. Für ein robustes Ultraschallsignal ist es besonders günstig, wenn der Vorlaufstreckenkörper mit, insbesondere aus, austenitischem Stahl gebildet ist. Vorzugsweise ist dabei eine Oberfläche des Vorlaufstreckenkörpers, insbesondere wenn dieser mit bzw. aus Stahl gebildet ist, poliert ausgebildet. Üblicherweise weist der Vorlaufstreckenkörper in Senderichtung eine Dicke kleiner als 30 mm, insbesondere zwischen 2 mm und 10 mm, bevorzugt etwa 5 mm auf.

Vorteilhaft ist es, wenn beim jeweiligen Ultraschallsensor das Dämpfungselement zwischen einer elektrischen Ansteuerelektrode und dem Piezokristall angeordnet ist, wobei das Dämpfungselement elektrisch leitfähig ausgebildet ist, sodass eine elektrische Ansteuerung des Piezokristalls über die Ansteuerelektrode durch das Dämpfungselement hindurch umsetzbar ist. Die elektrische Ansteuerelektrode kann mit vorgenanntem Federelement gegen das Dämpfungselement gepresst sein. Es versteht sich, dass in der Regel zwei Elektroden vorhanden sind, um den Piezokristall für ein Senden bzw.

Empfangen eines Ultraschallsignals elektrisch anzusteuern, insbesondere mit einer elektrischen Spannung zu beaufschlagen oder eine elektrische Spannung über die Elektroden abzunehmen. Die Elektroden sind üblicherweise an einander gegenüberliegenden Seiten des Piezokristalls mit dem Piezokristall elektrisch verbunden. Eine der Elektroden kann die Ansteuerelektrode sein und insbesondere auf vorgenannte Weise über das Dämpfungselement mit dem Piezokristall elektrisch verbunden sein. Die andere Elektrode kann unmittelbar mit dem Piezokristall elektrisch verbunden sein, üblicherweise an einer in Senderichtung dem Piezokristall nachgeordneten Seite des Piezokristalls. Alternativ oder kumulativ ist es günstig, wenn zur Bildung eines Piezoelementes zwei Piezoelektroden auf Oberflächen des Piezokristalls, üblicherweise einander gegenüberliegend am Piezokristall, aufgebracht sind, über welche Piezoelektroden der Piezokristall zur Schwingungsanregung ansteuerbar ist. Die Piezoelektroden sind üblicherweise aus Metall, vorzugsweise Silber, gebildet. Vorteilhaft kann vorgenannte Ansteuerelektrode zusätzlich vorgesehen sein.

Der jeweilige Ultraschallsensor weist üblicherweise ein Sensorgehäuse auf, welches einen Außenmantel des Ultraschallsensors bildet. In der Regel sind innerhalb des Sensorgehäuses das Dämpfungselement, der Piezokristall, üblicherweise im Wesentlichen der Vorlaufstreckenkörper, und/oder standardmäßig die Elektroden, insbesondere gegebenenfalls die Ansteuerelektrode, angeordnet. Das Sensorgehäuse weist üblicherweise eine Austrittsöffnung auf, über welche ein mit dem Piezokristall erzeugtes Ultraschallsignal für eine Messung mit dem Ultraschallsensor austreten kann. Die Austrittsöffnung ist üblicherweise fluiddicht verschlossen, häufig mit dem Vorlaufstreckenkörper.

Bewährt hat es sich, wenn der jeweiligen Ultraschallsensor zwischen dem Sensorgehäuse des Ultraschallsensors und jeweils dem Piezokristall des Ultraschallsensors und/oder dem Dämpfungselement des Ultraschallsensors und/oder einer, insbesondere mehrerer, Elektroden des Ultraschallsensors ein oder mehrere elektrische Isolierungselemente zur elektrischen Isolierung aufweist. Die elektrischen Isolierungselemente sind bevorzugt mit, insbesondere aus, Zirconiumdioxid, gebildet. Die elektrischen Isolierungselemente können diese Bauteile umfänglich umgeben. Auf diese Weise kann ein Risiko eines elektrischen Kurzschlusses auch unter hoher Belastung, insbesondere Druckbelastung und/oder Temperaturbelastung, minimiert werden.

Vorteilhaft ist es, wenn zwischen dem jeweiligen Ultraschallsensor und dem Wärmeübertragungsrohr ein mit Silber, insbesondere einer Silberfolie, gebildetes Koppelmittel oder kein Koppelmittel angeordnet ist. Dies gilt insbesondere im Betrieb des Wärmetauschers. Zweck des Koppelmittels ist es üblicherweise, ein reflexionsreduziertes Einkoppeln des Ultraschallsignals in das Wärmeübertragungsrohr zu ermöglichen. Es hat sich gezeigt, dass bei einem vorgenannten hohen Druck und/oder einer vorgenannten hohen Temperatur ein nachhaltiges Einkoppeln hoher Qualität erreichbar ist, wenn Silber als Koppelmittel eingesetzt wird oder kein Koppelmittel eingesetzt wird. Das Koppelmittel ist vorzugsweise schichtförmig ausgebildet. Das Koppelmittel weist häufig eine Dicke zwischen 0,01 mm bis 1 mm, insbesondere etwa 0,05 mm auf. Die Dicke wird üblicherweise in Senderichtung gemessen.

Der jeweilige Ultraschallsensor kann kraftschlüssig, formschlüssig oder stoffschlüssig mit dem jeweiligen Wärmeübertragungsrohr verbunden sein. Zweckmäßig kann hierfür eine Haltevorrichtung vorgesehen sein. Bevorzugt ist es, wenn der jeweilige Ultraschallsensor kraftschlüssig mit dem jeweiligen Wärmeübertragungsrohr verbunden ist, vorzugsweise mit einer Klemmverbindung. Auf diese Weise ist eine robuste Verbindung zwischen dem Ultraschallsensor und Wärmeübertragungsrohr ermöglicht, um eine störungsarme Einkoppelung des Ultraschallsignals in das Wärmeübertragungsrohr zu ermöglichen, ohne dabei aber das Messobjekt hinsichtlich der Rohrwanddickenmessung wesentlich zu beeinträchtigen. Günstig ist es, wenn die Haltevorrichtung ein Federbauteil aufweist, wobei der Ultraschallsensor mit dem Federbauteil federkraftbelastet gegen die Rohrwand des Wärmeübertragungsrohres gepresst wird. Dadurch kann eine ausgeprägte Anpressung auch unter, insbesondere wechselnden, Druck- und/oder Temperaturbelastungen gewährleistet werden. Das Federbauteil kann mit einer oder mehreren Tellerfedern gebildet sein. Zweckmäßig können mehrere der Ultraschallsensoren jeweils mit einer eigenen Haltevorrichtung, insbesondere wie beschrieben, mit dem jeweiligen Wärmeübertragungsrohr verbunden sein. Es kann aber auch vorgesehen sein, dass mehrere der Ultraschallsensoren mit einer gemeinsamen Haltevorrichtung mit dem jeweiligen Wärmeübertragungsrohr verbunden sind. Wenngleich weniger bevorzugt, kann alternativ der jeweilige Ultraschallsensor stoffschlüssig oder in einfachen Fällen formschlüssig mit dem Wärmeübertragungsrohr verbunden sein.

Von Vorteil ist es, wenn mehrere Ultraschallsensoren zur Datenübertragung mit derselben elektronischen Datenerfassungseinheit verbunden sind, um während eines Betriebs des Wärmetauschers Messdaten an die elektronische Datenerfassungseinheit zu übertragen. Auf diese Weise ist ein kompakter Aufbau mit vorzugsweise kurzen Signalleitungen umsetzbar. Üblicherweise weist die elektronische Datenerfassungseinheit mehrere Hardwareschnittstellen auf, an welche mit den Ultraschallsensoren zur Datenübertragung verbundene Signalleitungen angeschlossen sind. Jeweils eine Hardwareschnittstelle kann jeweils einer der Signalleitungen zugeordnet sein. Der jeweilige Ultraschallsensor kann mit einer eigenen Signalleitung zur Datenübertragung mit der elektronischen Datenerfassungseinheit verbunden sein. Alternativ können mehrere der mit den Ultraschallsensoren verbundenen Signalleitungen einen gemeinsamen Datenbus bilden, über welchen Messdaten an die elektronische Datenerfassungseinheit übertragbar sind. Günstig ist es, wenn mehrere elektronische Datenerfassungseinheiten vorhanden sind, wobei die Ultraschallsensoren von unterschiedlichen Gruppen von elektronischen Ultraschallsensoren mit unterschiedlichen elektronischen Datenerfassungseinheiten zur Datenübertragung verbunden sind. Dies ist insbesondere günstig um Signalleitungslängen kurz zu halten.

Vorteilhaft ist es, wenn mehrere elektronische Datenerfassungseinheiten zur Datenübertragung mit einer elektronischen Datenzentraleinheit verbunden sind, wobei die elektronische Datenzentraleinheit ausgebildet ist, die Messdaten der elektronischen Datenerfassungseinheiten zu sammeln und/oder aufzubereiten und/oder für ein Auslesen durch einen Benutzer zur Verfügung zu stellen. Die Messdaten können dabei von den elektronischen Datenerfassungseinheiten bereits vorverarbeitet sein und beispielsweise von der elektronischen Datenzentraleinheit weiter aufbereitet werden. Insbesondere können die elektronischen Datenerfassungseinheiten und/oder die elektronische Datenzentraleinheit ausgebildet sein, aus den Messdaten eine Rohrwanddicke des mit dem jeweiligen Ultraschallsensors vermessenen Wärmeübertragungsrohres, insbesondere dessen Rohrwand, zu bestimmen. Die elektronischen Datenerfassungseinheiten können über Datenübertragungsleitungen, insbesondere in Form eines Datenbusses, mit der elektronischen Datenzentraleinheit für eine Datenübertragung verbunden sein. Auf diese Weise kann ein kompakter Aufbau mit wenig Störungspotenzial der Messdaten, insbesondere durch die Hochdruck- und/oder Hochtemperaturverhältnisse im Wärmetauscher, umgesetzt werden. Die elektronische Datenzentraleinheit weist üblicherweise einen Mikrocontroller auf bzw. kann als Computer ausgebildet sein. Vorzugsweise weist der Wärmetauscher eine oder mehrere elektronische Datenzentraleinheiten auf.

Der Wärmetauscher ist üblicherweise für einen Betriebsdruck von größer als 30 bar, insbesondere zwischen 30 bar und 200 bar, vorzugsweise etwas 180 bar, und/oder eine Betriebstemperatur von größer als 80°C, insbesondere zwischen 80°C und 300°C, vorzugsweise etwa 230°C, ausgebildet bzw. wird entsprechend betrieben. Günstig ist es entsprechend, wenn der jeweilige Ultraschallsensor für einen Einsatz bei einem solchen Betriebsdruck und/oder einer solchen Betriebstemperatur ausgebildet ist bzw. einen solchen Einsatzdruck und/oder eine solche Einsatztemperatur aufweist. Der Betriebsdruck bzw. die Betriebstemperatur bezieht sich üblicherweise auf das erste Fluid und/oder zweite Fluid. Vorzugsweise weist im Betrieb des Wärmetauschers das zweite Fluid einen solchen Betriebsdruck und/oder eine solche Betriebstemperatur auf. In der Regel befindet sich im Betrieb des Wärmetauschers der jeweilige Ultraschallsensor innerhalb des zweiten Fluids. Entsprechend ist es günstig, wenn der jeweilige Ultraschallsensor für einen Einsatzdruck entsprechend dem Betriebsdruck bzw. eine Einsatztemperatur entsprechend dem Betriebsdruck des zweiten Fluids ausgebildet ist.

Der jeweilige Ultraschallsensor ist typischerweise an einer Rohrwand des jeweiligen Wärmeübertragungsrohres, insbesondere die Rohrwand kontaktierend, angeordnet. Üblicherweise sind an mehreren der Wärmeübertragungsrohre des Wärmetauschers jeweils ein Ultraschallsensor angeordnet. Es können auch jeweils mehrere Ultraschallsensoren an mehreren der Wärmeübertragungsrohre angeordnet sein. Die Wärmeübertragungsrohre sind in der Regel mit, insbesondere aus, Metall, insbesondere einer Eisenlegierung, bevorzugt einer Stahllegierung, gebildet.

Üblicherweise ist die elektronische Datenerfassungseinheit außerhalb des ersten Fluids und zweiten Fluids bzw. außerhalb eines Wärmeübertragungsraumes des Wärmetauschers angeordnet, in welchem Wärmeübertragungsraum im Betrieb des Wärmetauschers Wärme zwischen dem ersten Fluid und dem zweiten Fluid über die Wärmeübertragungsrohre übertragen wird. Der Wärmeübertragungsraum kann die Fluidkammer sein oder die Fluidkammer umschließen.

Günstig ist es, wenn auf diese Weise eine Rohrwanddicke eines Wärmeübertragungsrohres während eines Betriebs des Wärmetauschers mit einer Genauigkeit von kleiner als 0,1 mm, insbesondere zwischen 0,003 mm und 0,1 mm, üblicherweise 0,05 mm, bestimmbar ist. Dies kann mit einem Wärmetauscher gemäß diesem Dokument erreicht werden.

Das weitere Ziel wird durch ein Verfahren der eingangs genannten Art zum Betreiben eines Wärmetauschers gelöst, wenn an einem oder mehreren Wärmeübertragungsrohren des Wärmetauschers, mit welchen ein erstes Fluid transportiert wird, um über die Wärmeübertragungsrohre Wärme zwischen dem ersten Fluid und einem zweiten Fluid zu übertragen, jeweils ein Ultraschallsensor bei einem Einsatzdruck von mehr als 30 bar und/oder einer Einsatztemperatur von mehr als 80°C angeordnet ist, wobei mit dem jeweiligen Ultraschallsensor in situ eine Rohrwanddicke des jeweiligen Wärmeübertragungsrohres bestimmt wird, wobei Messdaten vom jeweiligen Ultraschallsensor während eines Betriebs des Wärmetauschers an eine elektronische Datenerfassungseinheit übermittelt werden. Das Verfahren kann insbesondere mit einem vorgenannten Wärmetauscher umgesetzt sein. Üblicherweise bezeichnet die Rohrwanddicke des Wärmeübertragungsrohres in einem Querschnitt des Wärmeübertragungsrohres einen, insbesondere radialen, Abstand zwischen einer Innenfläche und einer Außenfläche einer Rohrwand des Wärmeübertragungsrohres. Üblicherweise befindet sich das zweite Fluid außerhalb der Wärmeübertragungsrohre, sodass Wärme durch die Rohrwände der Wärmeübertragungsrohre hindurch zwischen dem erste Fluid und zweiten Fluid übertragen wird.

Es versteht sich, dass das Verfahren zum Betreiben eines Wärmetauschers entsprechend den Merkmalen und Wirkungen, welche im Rahmen eines Wärmetauschers, insbesondere vorstehend, in diesem Dokument beschrieben sind, ausgebildet sein kann. Analoges gilt auch für den Wärmetauscher im Hinblick auf das Verfahren.

Besonders günstig ist es, wenn das Verfahren zum Betreiben des Wärmetauschers zur Harnstoffsynthese eingesetzt ist. Der Wärmetauscher kann, insbesondere zur Harnstoffsynthese, als Stripper zur Strippung ausgebildet sein, wobei üblicherweise vorgesehen ist, dass eine Flüssigphase und Gasphase mit einander entgegenstehenden Durchströmungsrichtungen, in der Regel innerhalb der Wärmeübertragungsrohre, miteinander in Kontakt gebracht werden. Günstig ist es, wenn durch das jeweilige Wärmeübertragungsrohr in einer Durchströmungsrichtung ein erstes Medium fließt und in einer der Durchströmungsrichtung entgegengesetzten Richtung durch das Wärmeübertragungsrohr ein zweites Medium fließt, um miteinander zu reagieren, wobei in der Regel eines der Medien flüssig und das andere Medium gasförmig ist. Dies erfolgt üblicherweise innerhalb der Fluidkammer bzw. des Fluidkammerhohlraumes. Das erste Fluid kann mit bzw. aus dem ersten Medium und zweiten Medium gebildet sein. Günstig ist es, wenn die Wärmeübertragungsrohre bzw. eine Durchströmungsrichtung des ersten Fluids durch die Wärmeübertragungsrohre im Wesentlichen vertikal ausgerichtet sind, insbesondere wenn der Wärmetauscher ein Stripper ist. Der Wärmetauscher bzw. Stripper weist in der Regel eine Mehrzahl, insbesondere mehr als 10, bevorzugt mehr als 50, insbesondere bevorzugt mehr als 100, besonders bevorzugt mehr als 1000, Wärmeübertragungsrohre auf.

Üblicherweise weist der Wärmetauscher, insbesondere wenn dieser ein Stripper ist, einen ersten Einlass, über welchen das erste Medium in die Wärmeübertragungsrohre zuführbar ist, und einen zweiten Einlass, über welchen das zweite Medium in die Wärmeübertragungsrohre zuführbar ist, auf, sodass innerhalb der Fluidkammer bzw. dem Fluidkammerhohlraum die Medien mit einander entgegenstehenden Durchströmungsrichtungen durch die Wärmeübertragungsrohre fließen, um miteinander zu reagieren. Der erste Einlass und der zweite Einlass sind üblicherweise in Bezug auf den Fluidkammerhohlraum an unterschiedlichen Enden der Wärmeübertragungsrohre mit den Wärmeübertragungsrohren fluidleitend verbunden. In der Regel weist der Wärmetauscher zumindest einen Auslass zur Abfuhr eines mit einer Reaktion zwischen dem ersten Medium und dem zweiten Medium gebildeten Produktes aus den Wärmeübertragungsrohren auf. Praktikabel kann der Wärmetauscher einen ersten Auslass, über welchen ein erstes Produkt aus den Wärmeübertragungsrohren abführbar ist, und einen zweiten Auslass, über welchen ein zweites Produkt aus den Wärmeübertragungsrohren abführbar ist, aufweisen, wobei die Auslässe in Bezug auf den Fluidkammerhohlraum an unterschiedlichen Enden der Wärmeübertragungsrohre mit den Wärmeübertragungsrohren fluidleitend verbunden sind. Das erste Produkt und zweite Produkt werden üblicherweise mit bzw. durch die Reaktion zwischen dem ersten Medium und zweiten Medium gebildet. Dies gilt insbesondere, wenn der Wärmetauscher als Stripper ausgebildet ist.

Zur Harnstoffsynthese ist üblicherweise das erste Medium mit, insbesondere aus, Harnstoff, Ammoniumcarbamat und Ammoniak und das zweite Medium mit, insbesondere aus, gasförmiges Kohlenstoffdioxid (CO₂) gebildet. Auf diese Weise kann als Produkt, insbesondere erstes Produkt, Harnstoff, insbesondere hoher Reinheit, abgespalten werden, welcher, üblicherweise an einem der Enden des Wärmeübertragungsrohres bzw. über den ersten Auslass, aus dem Wärmeübertragungsrohr abgeleitet wird. Zweckmäßig kann gebildetes Prozessgas, in der Regel gasförmiges Ammoniak (NH₃) und/oder gasförmiges Kohlenstoffdioxid (CO₂), meist an einem anderen Ende des Wärmeübertragungsrohres bzw. über den zweiten Auslass, aus dem Wärmeübertragungsrohr abgeleitet werden. Das zweite Fluid kann mit, insbesondere aus, flüssigem und/oder gasförmigem Wasser gebildet sein. Der Stripper kann wie in diesem Dokument insbesondere zum Wärmetauscher beschrieben, ausgebildet sein bzw. betrieben werden.

Günstig ist es, wenn der jeweilige Ultraschallsensor mit einer Frequenz, insbesondere Mittenfrequenz, von mehr als 10 MHz, insbesondere zwischen 10 MHz und 30 MHz, betrieben wird, insbesondere Ultraschallsignale mit einer entsprechenden Frequenz vom jeweiligen Ultraschallsensor zur Bestimmung der Rohrwanddicke ausgesendet werden. Bevorzugt beträgt die Frequenz, insbesondere Mittenfrequenz, etwa 15 MHz.

Von Vorteil ist es, wenn zur Temperaturkompensation einer Ultraschallgeschwindigkeit des Ultraschallsignals eine Dicke des Vorlaufstreckenkörpers zumindest eines der Ultraschallsensoren als Referenzlänge verwendet wird und/oder eine Temperatur mit zumindest einem Thermoelement ermittelt wird. Da der Vorlaufstreckenkörper eine bekannte Dicke aufweist, kann durch Ermittlung einer Dicke des Vorlaufstreckenkörpers mittels der Ultraschallmessung, insbesondere mittels der Messsignale, des jeweiligen Ultraschallsensors eine Schallgeschwindigkeitsänderung des Ultraschallsignals berücksichtigt, insbesondere bestimmt werden. Die Dicke wird üblicherweise in Senderichtung gemessen. Zweckmäßig kann eine Temperaturkompensation bei jedem Messvorgang mit dem jeweiligen Ultraschallsensor durchgeführt werden. Dadurch ist eine hohe Genauigkeit der Messung erreichbar. Die Temperaturkompensation kann bei einer Bestimmung, insbesondere Berechnung, der Rohrwanddicke aus mit den Ultraschallsensoren ermittelten Messdaten berücksichtigt werden.

Zweckmäßig kann der Wärmetauscher ein oder mehrere, insbesondere vorgenannte, Thermoelemente aufweisen, wobei die Thermoelemente zur Messung einer Temperatur im Bereich der Ultraschallsensoren ausgebildet sind. Beispielsweise kann das jeweilige Thermoelement in der Fluidkammer, an, insbesondere in, einem der Wärmeübertragungsrohre oder am Ultraschallsensor angeordnet sein. Günstig ist es, wenn das jeweilige Thermoelement zur Datenübertragung mit der Datenerfassungseinheit verbunden ist. Dies kann über Datenkabel umgesetzt sein. Die Datenerfassungseinheit kann eine oder mehrere Hardwareschnittstellen für einen jeweiligen Anschluss eines Datenkabels aufweisen. Zweckmäßig kann das jeweilige Datenkabel innerhalb eines Schutzrohres, insbesondere wie vorgenannt ausgebildet, verlaufen. Das Schutzrohr kann dabei bis zum jeweiligen Thermoelement geführt sein. Datenkabel und Signalleitung können in einem gemeinsamen Schutzrohr verlaufen.

Eine Bestimmung der Rohrwanddicke mit dem jeweiligen Ultraschallsensor erfolgt in der Regel mittels Laufzeitverfahren. Mit dem jeweiligen Ultraschallsensor wird üblicherweise ein Ultraschallsignal ausgesendet und werden anschließend mit dem Ultraschallsensor reflektierte Ultraschallsignale detektiert. Die reflektierten Ultraschallsignale werden in der Regel durch Reflexion des ausgesendeten Ultraschallsignals an Grenzflächen gebildet. Die Grenzfläche kann beispielsweise eine Außenoberfläche und/oder Innenoberfläche einer Rohrwand eines Wärmeübertragungsrohres sein. Durch Ermittlung von zeitlichen Abständen zwischen ausgesendetem Ultraschallsignal und reflektierten Ultraschallsignalen und/oder zwischen reflektierten Ultraschallsignalen untereinander kann eine Dicke einer Rohrwand ermittelt werden, in welche das Ultraschallsignal eingeleitet wurde. Das Ultraschallsignal ist üblicherweise ein Ultraschallwellenimpuls. Üblicherweise wird ein am Ende des Vorlaufstreckenkörpers bzw. ein an einer Außenoberfläche der Rohrwand reflektiertes Ultraschallsignal, ein an einer Innenoberfläche der Rohrwand reflektiertes Ultraschallsignal und in der Regel eine Abfolge von reflektierten Ultraschallimpulsen, welche zu Mehrfachreflexionen zwischen der Innenoberfläche und der Außenoberfläche der Rohrwand korrespondieren, detektiert. Ein zeitlicher Abstand zwischen den detektierten reflektierten Ultraschallimpulsen der Mehrfachreflexionen korrespondiert üblicherweise zu einer zweifachen Rohrwanddicke. Als Zeitmarken können ein Sendezeitpunkt des Ultraschallsignals, ein an der Außenoberfläche der Rohrwand reflektiertes Ultraschallsignal und/oder ein oder mehrere an der Innenoberfläche der Rohrwand reflektierte Ultraschallsignale verwendet werden, um mit einem zeitlichen Vergleich der Zeitmarken eine jeweilige Rohrwanddicke zu bestimmen. Unter Berücksichtigung einer Schallgeschwindigkeit bzw. Ausbreitungsgeschwindigkeit des Ultraschallsignals kann die Rohrwanddicke bestimmt werden.

Weitere Merkmale, Vorteile und Wirkungen der Erfindung ergeben sich aus der nachfolgenden Darstellung eines Ausführungsbeispiels. In den Zeichnungen, auf welche dabei Bezug genommen wird, zeigen:
Fig. 1 eine schematische Darstellung eines Wärmetauschers;
Fig. 2 eine schematische Darstellung eines Ultraschallsensors in einem Querschnitt;
Fig. 3 eine schematische Darstellung eines weiteren Wärmetauschers, welcher als Stripper ausgebildet ist;
Fig. 4 eine schematische Darstellung eines weiteren Ultraschallsensors in einem Querschnitt.

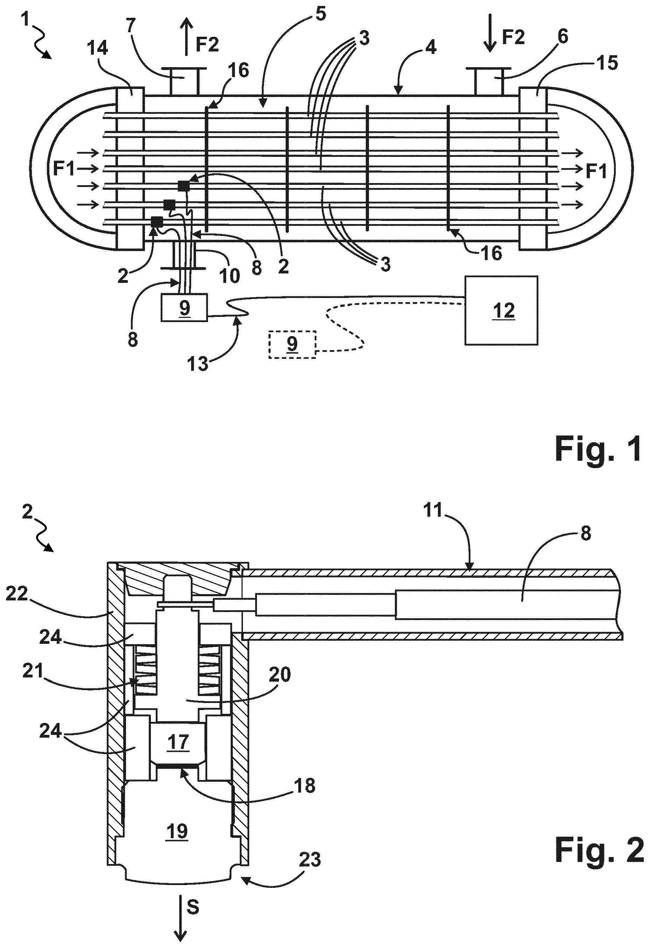

In Fig. 1 ist schematisch ein Wärmetauscher 1 dargestellt, wobei der Wärmetauscher 1 mehrere Wärmeübertragungsrohre 3 und eine Fluidkammer 4 aufweist, wobei die Wärmeübertragungsrohre 3 durch die Fluidkammer 4 verlaufen, um im Betrieb des Wärmetauschers 1 durch die Wärmeübertragungsrohre 3 ein erstes Fluid F1 hindurchzuleiten und durch die Fluidkammer 4 die Wärmübertragungsrohre umgebend ein zweites Fluid F2 hindurchzuleiten, sodass durch die Rohrwände der Wärmeübertragungsrohre 3 hindurch Wärme zwischen dem ersten Fluid F1 und dem zweiten Fluid F2 übertragen wird. Die Fluidkammer 4 bildet einen Fluidkammerhohlraum 5 zwischen Fluidkammerwänden und den Wärmeübertragungsrohren 3, um das zweite Fluid F2 aufzunehmen bzw. durch welchen das zweite Fluid F2 geleitet wird. Die Fluidkammer 4 weist einen Fluidkammereingang 6 zum Zuführen des zweiten Fluids F2 in die Fluidkammer 4, insbesondere den Fluidkammerhohlraum 5, und einen Fluidkammerausgang 7 zum Abführen des Fluids aus der Fluidkammer 4, insbesondere dem Fluidkammerhohlraum 5, auf. Das zweite Fluid F2 weist üblicherweise einen Druck von mehr als 30 bar, insbesondere zwischen 30 bar und 200 bar, auf und/oder eine Temperatur von mehr als 80°C, insbesondere zwischen 80°C und 300°C, auf. Üblicherweise sind die Wärmeübertragungsrohre 3 beabstandet voneinander durch die Fluidkammer 4 geführt, sodass das zweite Fluid F2 zwischen den Wärmeübertragungsrohren 3 hindurchströmen kann. Das erste Fluid F1 und/oder zweite Fluid F2 kann beispielsweise, flüssiges und/oder gasförmiges, Wasser sein. Der Wärmetauscher 1 kann als Stripper ausgebildet sein. Der Wärmetauscher 1, insbesondere Stripper, ist häufig derart ausgerichtet, dass eine Längserstreckung der Wärmeübertragungsrohre 3 im Wesentlichen vertikal ausgerichtet ist.

An mehreren der Wärmeübertragungsrohre 3 sind Ultraschallsensoren 2 angeordnet, um in situ und in operando, also während eines Betriebs des Wärmetauschers 1, mit dem jeweiligen Wärmetauscher 1 eine Rohrwanddicke des jeweiligen Wärmeübertragungsrohres 3 zu bestimmen. Der jeweilige Ultraschallsensor 2 ist innerhalb der Fluidkammer 4 an einer Außenseite des jeweiligen Wärmeübertragungsrohres 3 am Wärmeübertragungsrohr 3 angeordnet. Um hohen Temperaturen und/oder hohen Drücken im Wärmetauscher 1 zu widerstehen, sind die Ultraschallsensoren 2 für einen Einsatzdruck von mehr als 30 bar und/oder eine Einsatztemperatur von mehr als 80°C ausgebildet. Insbesondere sind die Ultraschallsensoren 2 ausgebildet vorgenanntem Druck und/oder vorgenannter Temperatur des zweiten Fluids F2 zu widerstehen bzw. weisen einen entsprechenden Einsatzdruck bzw. eine entsprechende Einsatztemperatur auf. Der jeweilige Ultraschallsensor 2 ist über eine Signalleitung 8 mit einer elektronischen Datenerfassungseinheit 9 verbunden, um während eines Betriebs des Wärmetauschers 1 Messdaten an die Datenerfassungseinheit 9 zu übertragen. Die Datenerfassungseinheit 9 befindet sich außerhalb der Fluidkammer 4, um durch die hohe Temperatur bzw. den hohen Druck im Wärmetauscher 1 nicht beeinträchtigt zu werden. Die jeweilige Signalleitung 8 ist üblicherweise als Koaxialkabel ausgebildet, um eine Messdatenübertragung störungsfrei umzusetzen. Die Fluidkammer 4 weist eine Signalleitungsdurchführung 10 auf, über welche die Signalleitungen 8 aus der Fluidkammer 4 hinausgeführt sind. Die Signalleitungsdurchführung 10 ist üblicherweise fluiddicht gegenüber dem Fluidkammerhohlraum 5 ausgebildet.

Um die jeweilige Signalleitung 8 vor dem Druck und der Temperatur in der Fluidkammer 4, insbesondere des zweiten Fluids F2, zu schützen, verläuft in der Fluidkammer 4 die jeweilige Signalleitung 8 innerhalb eines Schutzrohres 11, ersichtlich in Fig. 2. Das Schutzrohr 11 verläuft vom jeweiligen Ultraschallsensor 2 bis zur Signalleitungsdurchführung 10. Üblicherweise ist das Schutzrohr 11 einerseits mit dem jeweiligen Ultraschallsensor 2 fluiddicht verbunden, insbesondere verschweißt, und andererseits mit der Signalleitungsdurchführung 10, vorzugsweise mittels einer Keilschraubverbindung, fluiddicht, verbunden. Auf diese Weise kann mit dem Schutzrohr 11 ein vom Fluidkammerhohlraum 5 getrenntes Volumen, vorzugsweise mit anderer Atmosphäre, gebildet werden, in welchem die Signalleitung 8 verläuft. Das Schutzrohr 11 ist vorzugsweise aus Stahl, insbesondere austenitischem Stahl, gebildet.

Um Leitungslängen der Signalleitungen 8 kurz zu halten, ist es günstig, wenn mehrere elektronische Datenerfassungseinheiten 9 vorhanden sind, wobei unterschiedliche der Ultraschallsensoren 2 mit unterschiedlichen elektronischen Datenerfassungseinheiten 9 zur Datenübertragung verbunden sind. Dies ist in Fig. 1 durch eine strichliert dargestellte weitere elektronische Datenerfassungseinheit 9 dargestellt. Die weitere elektronische Datenerfassungseinheit 9 kann analog wie ausgeführt, mit weiteren an den Wärmeübertragungsrohren 3 angeordneten Ultraschallsensoren 2 zur Datenübertragung verbunden sein.

Üblicherweise ist eine elektronische Datenzentraleinheit 12 vorgesehen, mit welcher die elektronische Datenerfassungseinheit 9 bzw. die elektronischen Datenerfassungseinheiten 9 für eine Datenübertragung verbunden sind. Die elektronische Datenzentraleinheit 12 ist ausgebildet, die Messdaten der elektronischen Datenerfassungseinheiten 9 zu sammeln und vorzugsweise für ein Auslesen durch einen Benutzer zur Verfügung zu stellen. Die elektronischen Datenerfassungseinheiten 9 sind üblicherweise über eine elektrische Kabelverbindung 13, insbesondere einen Datenbus, mit der elektronischen Datenzentraleinheit 12 zur Datenübertragung verbunden.

In der Regel erstrecken sich die Wärmeübertragungsrohre 3 jeweils zwischen einer ersten Rohrplatte 14 und einer zweiten Rohrplatte 15, wobei die Rohrplatten als Teil von Fluidkammerwänden der Fluidkammer 4 ausgeführt sind bzw. den Fluidkammerhohlraum 5 begrenzen. Das jeweilige Wärmeübertragungsrohr 3 ist durch die erste Rohrplatte 14 und die zweite Rohrplatte 15 hindurchgeführt. Die Fluidkammer 4 weist mehrere Stabilisierungselemente 16, üblicherweise bezeichnet als Baffles auf, welche mehrere der Wärmeübertragungsrohre 3 miteinander verbinden, um mit den Stabilisierungselementen 16die Wärmeübertragungsrohre 3 im Betrieb des Wärmetauschers 1 zu stabilisieren. Zweckmäßig können mehrere entlang einer Längserstreckung der Wärmeübertragungsrohre 3 voneinander beabstandete Stabilisierungselemente 16 vorhanden sein, welche Stabilisierungselemente 16 quer, insbesondere orthogonal, zur Längserstreckung der Wärmeübertragungsrohre 3 orientiert sind. Zweckmäßig ist es, wenn das jeweilige Stabilisierungselement 16 bzw. eine durch dieses gebildete Fluidführungsfläche einen Zwischenraum zwischen mehreren der Wärmeübertragungsrohre 3 verschließt, um einen Durchfluss des zweiten Fluids F2 durch den Zwischenraum zu unterbinden. Häufig wird durch das jeweilige Stabilisierungselement 16 bzw. die Fluidführungsfläche in einem Querschnitt durch die Fluidkammer 4 ein Großteil der Zwischenräume zwischen den Wärmeübertragungsrohren 3 für einen Durchfluss des zweiten Fluids F2 verschlossen.

Vorteilhaft ist es, wenn der jeweilige Ultraschallsensor 2 in einem Anordnungsbereich am jeweiligen Wärmeübertragungsrohr 3 angeordnet ist, welcher Anordnungsbereich in Durchströmungsrichtung des ersten Fluids F1 durch das Wärmeübertragungsrohr 3 in einem ersten Drittel einer Längserstreckung des Wärmeübertragungsrohres 3 innerhalb der Fluidkammer 4 bzw. des Fluidkammerhohlraums 5 liegt. Bevorzugt befindet sich dabei der Ultraschallsensor 2 in Durchströmungsrichtung des ersten Fluids F1 durch das Wärmeübertragungsrohr 3 zwischen der ersten Rohrplatte 14 und einem ersten der Stabilisierungselemente 16.

Fig. 2 zeigt eine schematische Darstellung eines Ultraschallsensors 2. Insbesondere sind die Ultraschallsensoren 2 der Fig. 1 entsprechend ausgebildet. Der Ultraschallsensor 2 umfasst ein Dämpfungselement 17, einen Piezokristall 18 und einen Vorlaufstreckenkörper 19. In einer Senderichtung, in welcher ein Ultraschallsignal mit dem Ultraschallsensor 2 aussendbar ist, ist der Piezokristall 18 zwischen dem Dämpfungselement 17 und dem Vorlaufstreckenkörper 19 angeordnet. Das Dämpfungselement 17 ist ausgebildet, eine mechanische Schwingung des Piezokristalls 18 zu dämpfen. Der Vorlaufstreckenkörper 19 ist ausgebildet, ein mit dem Piezokristall 18 erzeugtes Ultraschallsignal in Sendrichtung weiterzuleiten, sodass sich das Ultraschallsignal während einer Zeit eines Umschaltens zwischen einem Sendemodus und einem Empfangsmodus des Ultraschallsensors 2 innerhalb des Vorlaufstreckenkörpers 19 befindet. Im Sendemodus kann mit dem Ultraschallsensor 2, insbesondere Piezokristall 18, ein Ultraschallsignal ausgesendet werden. Im Empfangsmodus kann mit dem Ultraschallsensor 2, insbesondere Piezokristall 18, ein Ultraschallsignal detektiert werden.

Das Dämpfungselement 17 ist elektrisch leitfähig ausgebildet und ist in Senderichtung S dem Dämpfungselement 17 vorgelagert mit einer Ansteuerelektrode 20 derart elektrisch verbunden, dass das Piezoelement über die Ansteuerelektrode 20 durch das Dämpfungselement 17 hindurch elektrisch ansteuerbar ist. Die Ansteuerelektrode 20 stellt üblicherweise eine elektrische Kathode dar. Die Ansteuerelektrode 20 ist mit einer Signalleitung 8 zur Ansteuerung des Ultraschallsensors 2 bzw. Datenübertragung elektrisch verbunden. Die Signalleitung 8 ist wie vorgenannt ausgeführt mit einer elektronischen Datenerfassungseinheit 9 zur Datenübertragung verbunden. Die Signalleitung 8 ist üblicherweise ein Koaxialkabel.

Der Ultraschallsensor 2 weist ein Federelement 21 auf, mit welchem die Ansteuerelektrode 20, das Dämpfungselement 17, der Piezokristall 18 und der Vorlaufstreckenkörper 19 mittels Federkraft des Federelementes 21 aneinandergepresst sind. Auf diese Weise kann ein widerstandsfähiger Verbund, insbesondere ohne Klebstoff, umgesetzt werden. Das Federelement 21 kann vorteilhaft mit mehreren in Reihenschaltung angeordneten Tellerfedern umgesetzt sein. Zweckmäßig weist der Ultraschallsensor 2 ein Sensorgehäuse 22 auf, welches einen Außenmantel des Ultraschallsensors 2 bildet. Das Sensorgehäuse 22 weist eine Austrittsöffnung 23 für das Ultraschallsignal auf, wobei die Austrittsöffnung 23 mit dem Vorlaufstreckenkörper 19, insbesondere fluiddicht, verschlossen ist. Der Vorlaufstreckenkörper 19 ist üblicherweise kraftschlüssig mit dem Sensorgehäuse 22, beispielsweise mit einer Schraubverbindung, verbunden.

Zwischen dem Sensorgehäuse 22 und jeweils dem Dämpfungselement 17 und der Ansteuerelektrode 20 ist jeweils ein elektrisches Isolierungselement 24, vorzugsweise gebildet aus Zirconiumdioxid, angeordnet, welches üblicherweise das Dämpfungselement 17 bzw. die Steuerelektrode umfänglich umgibt, um einen elektrischen Kontakt mit dem Sensorgehäuse 22 zu verhindern.

Um die Signalübertragung vom Ultraschallsensor 2 zur elektronischen Datenerfassungseinheit 9 vor dem zweiten Fluid F2, insbesondere dessen Druck und/oder Temperatur, zu schützen, verläuft die Signalleitung 8, insbesondere wie vorgenannt ausgeführt, innerhalb eines Schutzrohres 11. Das Schutzrohr 11 schließt fluiddicht an das Sensorgehäuse 22 an, vorzugsweise mittels Schweißverbindung, sodass das Schutzrohr 11 und das Sensorgehäuse 22 ein gegenüber der Fluidkammer 4 bzw. dem Fluidkammerhohlraum 5 separiertes Volumen definieren. Auf diese Weise kann der Ultraschallsensor 2 und die Datenübertragung zwischen Ultraschallsensor 2 und elektronischer Datenerfassungseinheit 9 vor dem zweiten Fluid F2 geschützt werden.

Der Piezokristall 18 kann aus einer Blei-Zirkonat-Titanat-Keramik (PZT-Keramik) gebildet sein. Das Dämpfungselement 17 kann aus Titansinter, vorzugsweise mit einer durchschnittlichen Porengröße zwischen 1 µm und 10 µm, gebildet sein. Der Vorlaufstreckenkörper 19 kann aus Stahl, insbesondere austenitischem Stahl, mit einer Dicke in Senderichtung S zwischen 2 mm und 10 mm gebildet sein. Die Ansteuerelektrode 20 kann mit, insbesondere aus, Kupfer gebildet sein. Die Wärmeübertragungsrohre 3 sind üblicherweise aus Stahl, insbesondere austenitischem Stahl, gebildet. Der Ultraschallsensor 2 ist vorzugsweise ausgebildet, ein Ultraschallsignal, insbesondere eine Ultraschallwelle, mit einer Mittenfrequenz von ca. 15 MHz auszusenden.

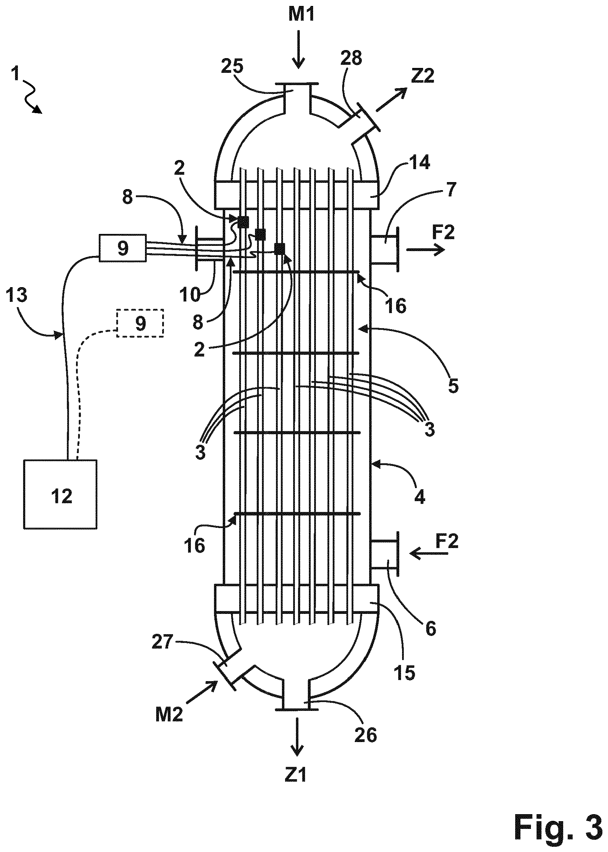

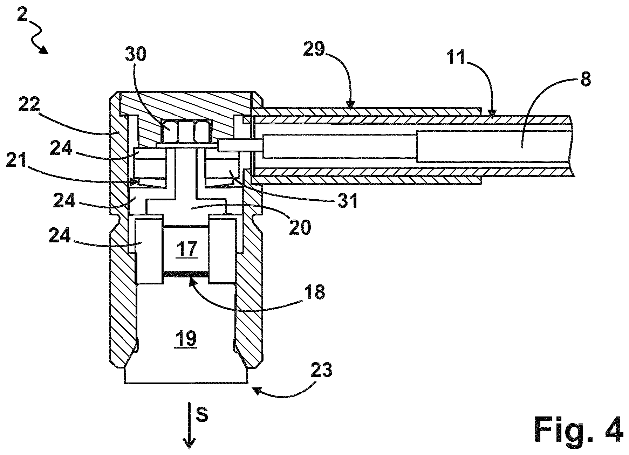

Fig. 3 zeigt eine schematische Darstellung eines weiteren Wärmetauschers 1, welcher als Stripper zur Strippung ausgebildet ist. Üblicherweise wird ein solcher Wärmetauscher 1 zur Harnstoffsynthese eingesetzt. Der Wärmetauscher 1 kann entsprechend den Erläuterungen zum Wärmetauscher 1 der Fig. 1 ausgebildet und insbesondere Ultraschallsensoren 2 wie zu Fig. 2 und/oder Fig. 4 erläutert aufweisen. Der Wärmetauscher 1 ist üblicherweise derart ausgerichtet, dass eine Längserstreckung der Wärmeübertragungsrohre 3 im Wesentlichen vertikal ausgerichtet ist. Zur Harnstoffsynthese ist vorgesehen, dass das erste Fluid F1 mit bzw. aus einem ersten Medium M1 und einem zweiten Medium M2 gebildet ist, wobei innerhalb der Fluidkammer 4 bzw. des Fluidkammerhohlraumes 5 das erste Medium M1 und zweite Medium M2 in einander entgegengesetzten Durchströmungsrichtungen durch das jeweilige Wärmeübertragungsrohr 3 strömen. In der Regel ist das erste Medium M1 mit, insbesondere aus, Harnstoff, Ammoniumcarbamat und Ammoniak und das zweite Medium M1 mit, insbesondere aus, gasförmiges Kohlenstoffdioxid (CO₂) gebildet. Das erste Medium ist üblicherweise flüssig. Der Wärmetauscher 1 bzw. Stripper weist in der Regel eine Mehrzahl, insbesondere mehr als 10, bevorzugt mehr als 50, insbesondere bevorzugt mehr als 100, besonders bevorzugt mehr als 1000, Wärmeübertragungsrohre 3 auf. Der Wärmetauscher 1 ist üblicherweise derart ausgerichtet, dass sich die erste Rohrplatte 14 vertikal über der zweiten Rohrplatte 15 befindet. Bevorzugt befindet sich der jeweilige Ultraschallsensor 2 zwischen der ersten Rohrplatte 14 und einem ersten der Stabilisierungselemente 16.

Der Wärmetauscher 1 weist einen ersten Einlass 25, über welchen das erste Medium M1 in die Wärmeübertragungsrohre 3 zuführbar ist, und einen zweiten Einlass 27, über welchen das zweite Medium M2 in die Wärmeübertragungsrohre zuführbar ist, auf, sodass innerhalb der Fluidkammer 4 bzw. dem Fluidkammerhohlraum 5 die Medien M1, M2 mit einander entgegenstehenden Durchströmungsrichtungen durch die Wärmeübertragungsrohre 3 fließen, um miteinander zu reagieren. Der erste Einlass 25 und der zweite Einlass 27 sind in Bezug auf den Fluidkammerhohlraum 5 an unterschiedlichen Enden der Wärmeübertragungsrohre 3 mit den Wärmeübertragungsrohren 3 fluidleitend verbunden. Hierzu kann der erste Einlass 25 und der zweite Einlass 27 jeweils mit einer Fluidverteilungskammer fluidleitend verbunden sein, wobei jeweils Enden der Wärmeübertragungsrohre 3 fluidleitend mit der Fluidverteilungskammer verbunden sind, sodass über den ersten Einlass 25 bzw. zweiten Einlass 27 in die jeweilige Fluidverteilungskammer zugeführtes erstes Medium M1 bzw. zweites Medium M2 auf die Wärmeübertragungsrohre 3 verteilt in die Wärmeübertragungsrohre 3 eingeleitet wird. Der Wärmetauscher 1 weist einen ersten Auslass 26, über welchen ein erstes Produkt Z1 aus den Wärmeübertragungsrohren 3 abführbar ist, und einen zweiten Auslass 28, über welchen ein zweites Produkt Z2 aus den Wärmeübertragungsrohren 3 abführbar ist, auf, wobei der erste Auslass 26 und zweite Auslass 28 in Bezug auf den Fluidkammerhohlraum 5 an unterschiedlichen Enden der Wärmeübertragungsrohre 3 mit den Wärmeübertragungsrohren 3 fluidleitend verbunden sind, vorzugsweise indem der erste Auslass 26 und zweite Auslass 28 jeweils mit einer der Fluidverteilungskammern fluidleitend verbunden ist, sodass ein aus den Wärmeübertragungsrohren 3 austretendes erstes Produkt Z1 bzw. zweites Produkt Z2 über den jeweiligen Auslass 26, 28 abführbar ist. Das erste Produkt Z1 ist üblicherweise Harnstoff, insbesondere in hoher Reinheit. Das zweite Produkt Z2 ist üblicherweise gasförmiges Ammoniak (NH₃) und/oder gasförmiges Kohlenstoffdioxid (CO₂). Das zweite Fluid F2 ist in der Regel mit, insbesondere aus, flüssigem und/oder gasförmigem Wasser gebildet.

In Fig. 4 ist eine schematische Darstellung eines weiteren Ultraschallsensors 2 in einer Querschnittsansicht dargestellt. Der Ultraschallsensor 2 kann die gleichen Merkmale und Wirkungen wie der Ultraschallsensor 2 der Fig. 2 aufweisen. Der Ultraschallsensor 2 kann bei einem Wärmetauscher 1 der Fig. 1 und Fig. 3 eingesetzt sein. Der Ultraschallsensor 2 der Fig. 4 entspricht in dessen Aufbau im Wesentlichen dem Ultraschallsensor 2 der Fig. 2. Insbesondere weist der Ultraschallsensor 2 ein Federelement 21 auf, mit welchem die Ansteuerelektrode 20, das Dämpfungselement 17, der Piezokristall 18 und der Vorlaufstreckenkörper 19 mittels Federkraft des Federelementes 21 aneinandergepresst sind. Das Federelement 21 ist zwischen der Ansteuerelektrode und einem Gegenlager 31, welches mit einer Ringmutter gebildet sein kann, angeordnet. Zur Herstellung einer elektrischen Verbindung zwischen der Signalleitung 8 und der Ansteuerelektrode 20 sind diese mit einem Klemmelement 30 kraftschlüssig miteinander verbunden. Im Unterschied zum Ultraschallsensor 2 der Fig. 2 weist Ultraschallsensor 2 einen, insbesondere rohrförmigen, Anschlussstutzen 29 zur formschlüssigen Aufnahme des Schutzrohres 11 auf, wobei das Schutzrohr 11 fluiddicht in den Anschlussstutzen 29 eingefügt ist. Auf diese Weise ist ein besonders robuster Anschluss der Signalleitung 8 an den Ultraschallsensor 2 umsetzbar, beispielweise für einen Einsatz bei besonders hohem Druck im Fluidkammerhohlraum 5 bzw. des zweiten Fluids F2. Der Anschlussstutzen 29 kann mit bzw. aus Stahl, insbesondere austenitischem Stahl, gebildet sein. Zweckmäßig kann auch der Ultraschallsensor der Fig. 2 einen solchen Anschlussstutzen 29 aufweisen.

Wenn an einem oder mehreren der Wärmeübertragungsrohre 3 des Wärmetauschers 1 jeweils ein Ultraschallsensor 2 angeordnet ist, welcher für einen Einsatzdruck von mehr als 30 bar, insbesondere zwischen 30 bar und 200 bar, und/oder einer Einsatztemperatur von mehr als 80°C, insbesondere zwischen 80°C und 300°C, ausgebildet ist und wobei der Ultraschallsensor 2 ausgebildet ist, während eines Betriebs des Wärmetauschers 1 Messdaten an eine elektronische Datenerfassungseinheit 9 zu übertragen, kann eine Rohrdicke der jeweiligen Wärmeübertragungsrohre 3 praktikabel in situ und bevorzugt in operando bestimmt werden. Dies ermöglich eine optimierte Einsatzfähigkeit des Wärmetauschers 1. Insbesondere wenn eine Signalleitung 8 zur Übertragung der Messsignale vom jeweiligen Ultraschallsensor 2 zur elektronischen Datenerfassungseinheit 9 innerhalb des zweiten Fluids F2 in einem Schutzrohr 11 verläuft und/oder im Ultraschallsensor 2 das Dämpfungselement 17, der Piezokristall 18 und der Vorlaufstreckenkörper 19 mittels Federkraft eines Federelementes 21 aneinandergepresst sind, kann eine besonders hohe Robustheit der InsituBestimmung und in der Regel In-operando-Bestimmung der Rohrwanddicken umgesetzt werden.

## Patentansprüche

1. Wärmetauscher (1), insbesondere Hochdruckwärmetauscher zur Harnstoffsynthese, aufweisend mehrere Wärmeübertragungsrohre (3) zum Transport eines ersten Fluids (F1), um über die Wärmeübertragungsrohre (3) Wärme zwischen dem ersten Fluid (F1) und einem zweiten Fluid (F2) zu übertragen, wobei an einem oder mehreren der Wärmeübertragungsrohre (3) jeweils ein Ultraschallsensor (2) zur In-situ-Bestimmung von Rohrwanddicken der Wärmeübertragungsrohre (3) angeordnet ist, wobei der jeweilige Ultraschallsensor (2) für einen Einsatzdruck von mehr als 30 bar und/oder eine Einsatztemperatur von mehr als 80°C ausgebildet ist, wobei der jeweilige Ultraschallsensor (2) zur Datenübertragung mit einer elektronischen Datenerfassungseinheit (9) verbunden ist, um während eines Betriebs des Wärmetauschers (1) Messdaten an die elektronische Datenerfassungseinheit (9) zu übertragen, **dadurch gekennzeichnet dass** eine Senderichtung eines vom jeweiligen Ultraschallsensor (2) aussendbaren Ultraschallsignals quer, insbesondere im Wesentlichen orthogonal, zu einer Längserstreckung des Wärmeübertragungsrohres (3) ist.

2. Wärmetauscher (1) nach Anspruch 1, **dadurch gekennzeichnet, dass** der Wärmetauscher (1) eine Fluidkammer (4) zur Aufnahme des zweiten Fluids (F2) aufweist, wobei die Wärmeübertragungsrohre (3) innerhalb der Fluidkammer (4) verlaufen, wobei die Datenerfassungseinheit (9) außerhalb der Fluidkammer (4) angeordnet ist.

3. Wärmetauscher (1) nach Anspruch 1 oder 2, **dadurch gekennzeichnet, dass** der jeweilige Ultraschallsensor (2) zur Datenübertragung über eine Signalleitung (8) mit der Datenerfassungseinheit (9) verbunden ist, wobei die Signalleitung (8) zumindest abschnittsweise innerhalb eines Schutzrohres (11), vorzugsweise gebildet aus Metall, verläuft, um die Signalleitung zu schützen.

4. Wärmetauscher (1) nach Anspruch 2 und 3, **dadurch gekennzeichnet, dass** einerseits das Schutzrohr (11) mit dem Sensorgehäuse (22) des jeweiligen Ultraschallsensors (2) verschweißt ist und/oder andererseits das Schutzrohr (11) an eine Signalleitungsdurchführung (10), vorzugsweise mittels einer Keilschraubverbindung, anschließt, mit welcher die Signalleitung (8) durch eine Fluidkammerwand der Fluidkammer (4) hindurchgeführt ist.

5. Wärmetauscher (1) nach Anspruch 3 oder 4, **dadurch gekennzeichnet, dass** das Schutzrohr (11) ein im Betrieb vom ersten Fluid (F1) und zweiten Fluid (F2) separiertes Volumen definiert, innerhalb welchem die Signalleitung verläuft.

6. Wärmetauscher (1) nach einem der Ansprüche 1 bis 5, **dadurch gekennzeichnet, dass** der jeweilige Ultraschallsensor (2) ein Dämpfungselement (17), einen Piezokristall (18) und einen Vorlaufstreckenkörper (19) umfasst, welche mittels eines Federelementes (21) aneinandergepresst sind.

7. Wärmetauscher (1) nach Anspruch 6, **dadurch gekennzeichnet, dass** das Federelement (21) mit einer Anordnung von mehreren Federn, vorzugsweise in Reihenschaltung, gebildet ist.

8. Wärmetauscher (1) nach Anspruch 6 oder 7, **dadurch gekennzeichnet, dass** beim jeweiligen Ultraschallsensor (2) das Dämpfungselement (17) zwischen einer elektrischen Ansteuerelektrode und dem Piezokristall (18) angeordnet ist, wobei das Dämpfungselement (17) elektrisch leitfähig ausgebildet ist, sodass eine elektrische Ansteuerung des Piezokristalls (18) über die Ansteuerelektrode durch das Dämpfungselement (17) hindurch umsetzbar ist.

9. Wärmetauscher (1) nach einem der Ansprüche 1 bis 8, **dadurch gekennzeichnet, dass** der jeweilige Ultraschallsensor (2) zwischen einem Sensorgehäuse (22) des Ultraschallsensors (2) und jeweils einem Piezokristall (18) und/oder einem Dämpfungselement (17) und/oder einer Elektrode des Ultraschallsensors ein oder mehrere elektrische Isolierungselemente zur elektrischen Isolierung, bevorzugt gebildet mit Zirconiumdioxid, aufweist.

10. Wärmetauscher (1) nach einem der Ansprüche 1 bis 9, **dadurch gekennzeichnet, dass** zwischen dem jeweiligen Ultraschallsensor (2) und dem Wärmeübertragungsrohr (3) ein mit Silber, insbesondere einer Silberfolie, gebildetes Koppelmittel oder kein Koppelmittel angeordnet ist.

11. Wärmetauscher (1) nach einem der Ansprüche 1 bis 10, **dadurch gekennzeichnet, dass** der jeweilige Ultraschallsensor (2) kraftschlüssig mit dem jeweiligen Wärmeübertragungsrohr (3) verbunden ist, vorzugsweise mit einer Klemmverbindung.

12. Wärmetauscher (1) nach einem der Ansprüche 1 bis 11, **dadurch gekennzeichnet, dass** mehrere Ultraschallsensoren (2) zur Datenübertragung mit derselben elektronischen Datenerfassungseinheit (9) verbunden sind, um während eines Betriebs des Wärmetauschers (1) Messdaten an die Datenerfassungseinheit (9) zu übertragen.

13. Verfahren zum Betreiben eines Wärmetauschers (1), insbesondere eines Wärmetauschers (1) nach einem der Ansprüche 1 bis 12, **dadurch gekennzeichnet, dass** an einem oder mehreren Wärmeübertragungsrohren (3), mit welchen ein erstes Fluid (F1) transportiert wird, um über die Wärmeübertragungsrohre (3) Wärme zwischen dem ersten Fluid (F1) und einem zweiten Fluid (F2) zu übertragen, jeweils ein Ultraschallsensor (2) bei einem Einsatzdruck von mehr als 30 bar und/oder einer Einsatztemperatur von mehr als 80°C angeordnet ist, sodass eine Senderichtung eines vom jeweiligen Ultraschallsensor (2) aussendbaren Ultraschallsignals quer, insbesondere im Wesentlichen orthogonal, zu einer Längserstreckung des Wärmeübertragungsrohres (3) ist, wobei mit dem jeweiligen Ultraschallsensor (2) in situ eine Rohrwanddicke des jeweiligen Wärmeübertragungsrohres (3) bestimmt wird, wobei Messdaten vom jeweiligen Ultraschallsensor (2) während eines Betriebs des Wärmetauschers (1) an eine elektronische Datenerfassungseinheit (9) übermittelt werden.

14. Verfahren nach Anspruch 13, **dadurch gekennzeichnet, dass** der jeweilige Ultraschallsensor (2) mit einer Frequenz, insbesondere Mittenfrequenz, von mehr als 10 MHz, insbesondere zwischen 10 MHz und 30 MHz, betrieben wird.

15. Verfahren nach Anspruch 13 oder 14, **dadurch gekennzeichnet, dass** zur Temperaturkompensation einer Ultraschallgeschwindigkeit des Ultraschallsignals eine Dicke des Vorlaufstreckenkörper (19) zumindest eines der Ultraschallsensoren (2) als Referenzlänge verwendet wird und/oder eine Temperatur mit zumindest einem Thermoelement ermittelt wird.

## Claims

1. A heat exchanger (1), in particular a high-pressure heat exchanger for urea synthesis, having several heat transfer pipes (3) for transporting a first fluid (F1), so as to transfer heat between the first fluid (F1) and a second fluid (F2) via the heat transfer pipes (3),
wherein a respective ultrasonic sensor (2) for the in-situ determination of pipe wall thicknesses of the heat transfer pipes (3) is arranged on one or several of the heat transfer pipes (3),
wherein the respective ultrasonic sensor (2) is designed for an operating pressure of more than 30 bar and/or an operating temperature of more than 80°C, wherein the respective ultrasonic sensor (2) is connected with an electronic data acquisition unit (9) for data transmission, so as to transmit measured data to the electronic data acquisition unit (9) during operation of the heat exchanger (1), **characterized in that** a transmission direction of an ultrasonic signal that can be transmitted from the respective ultrasonic sensor (2) is transverse, in particular essentially orthogonal, to a longitudinal extension of the heat transfer pipe (3).

2. The heat exchanger (1) according to claim 1, **characterized in that** the heat exchanger (1) has a fluid chamber (4) for holding the second fluid (F2), wherein the heat transfer pipes (3) run inside of the fluid chamber (4), wherein the data acquisition unit (9) is arranged outside of the fluid chamber (4).

3. The heat exchanger (1) according to claim 1 or 2, **characterized in that** the respective ultrasonic sensor (2) is connected with the data acquisition unit (9) via a signal cable (8) for data transmission purposes, wherein the signal cable (8) at least sectionally runs inside of a protective pipe (11), preferably made out of metal, so as to protect the signal cable.

4. The heat exchanger (1) according to claim 2 and 3, **characterized in that** on the one hand, the protective pipe (11) is welded with the sensor housing (22) of the respective ultrasonic sensor (2), and/or on the other hand, that the protective pipe (11) adjoins a signal cable feed-through (10), preferably by means of a wedge screw connection, with which the signal cable (8) is guided through a fluid chamber wall of the fluid chamber (4) .

5. The heat exchanger (1) according to claim 3 or 4, **characterized in that** the protective pipe (11) defines a volume separated from the first fluid (F1) and second fluid (F2) during operation, inside of which the signal cable runs.

6. The heat exchanger (1) according to one of claims 1 to 5, **characterized in that** the respective ultrasonic sensor (2) comprises a damping element (17), a piezo crystal (18) and a lead pipe body (19), which are pressed against each other by means of a spring element (21) .

7. The heat exchanger (1) according to claim 6, **characterized in that** the spring element (21) is comprised of an arrangement of several springs, preferably in series.

8. The heat exchanger (1) according to claim 6 or 7, **characterized in that** the damping element (17) is arranged between an electric control electrode and the piezo crystal (18) in the respective ultrasonic sensor (2), wherein the damping element (17) is electrically conductive in design, so that electric control of the piezo crystal (18) can be implemented via the control electrode through the damping element (17).

9. The heat exchanger (1) according to one of claims 1 to 8, **characterized in that** the respective ultrasonic sensor (2) has one or several electric insulation elements for electric insulation between a sensor housing (22) of the ultrasonic sensor (2) and a respective piezo crystal (18) and/or a damping element (17) and/or an electrode of the ultrasonic sensor, preferably made with zirconium dioxide.

10. The heat exchanger (1) according to one of claims 1 to 9, **characterized in that** a coupling means made with silver, in particular a silver film, or no coupling means are arranged between the respective ultrasonic sensor (2) and the heat transfer pipe (3).

11. The heat exchanger (1) according to one of claims 1 to 10, **characterized in that** the respective ultrasonic sensor (2) is connected by force with the respective heat transfer pipe (3), preferably with a clamping connection.

12. The heat exchanger (1) according to one of claims 1 to 11, **characterized in that** several ultrasonic sensors (2) for data transmission are connected with the same electronic data acquisition unit (9), so as to transmit measured data to the data acquisition unit (9) during operation of the heat exchanger (1).

13. A method for operating a heat exchanger (1), in particular a heat exchanger (1) according to one of claims 1 to 12, **characterized in that**, at an operating pressure of more than 30 bar and/or an operating temperature of more than 80°C, a respective ultrasonic sensor (2) is arranged on one or several heat transfer pipes (3), with which a first fluid (F1) is transported, so as to transfer heat between the first fluid (F1) and a second fluid (F2) via the heat transfer pipes (3), so that a transmission direction of an ultrasonic signal transmittable from the respective ultrasonic sensor (2) is transverse, in particular essentially orthogonal, to a longitudinal extension of the heat transfer pipe (3), wherein the respective ultrasonic sensor (2) is used for the in-situ determination of a pipe wall thickness of the respective heat transfer pipe (3), wherein measured data are transmitted from the respective ultrasonic sensor (2) to an electronic data acquisition unit (9) during operation of the heat exchanger (1).

14. The method according to claim 13, **characterized in that** the respective ultrasonic sensor (2) is operated at a frequency, in particular a center frequency, of more than 10 MHz, in particular of between 10 MHz and 30 MHz.

15. The method according to claim 13 or 14, **characterized in that**, in order to compensate for the temperature of an ultrasonic velocity of the ultrasonic signal, a thickness of the lead pipe body (19) of at least one of the ultrasonic sensors (2) is used as a reference length and/or a temperature is determined with at least one thermocouple.

## Revendications

1. Echangeur de chaleur (1), en particulier échangeur de chaleur à haute pression pour la synthèse de l'urée, comportant plusieurs tubes de transmission de chaleur (3) pour le transport d'un premier fluide (F1) pour transmettre par le biais des tubes de transmission de chaleur (3) de la chaleur entre le premier fluide (F1) et un deuxième fluide (F2),
sachant qu'un capteur à ultrasons (2) est respectivement disposé sur un ou plusieurs tubes de transmission de chaleur (3) pour la détermination in situ des épaisseurs de paroi tubulaire des tubes de transmission de chaleur (3),
sachant que le capteur à ultrasons respectif (2) est constitué pour une pression d'utilisation de plus de 30 bars et/ou une température d'utilisation de plus de 80°C, sachant que le capteur à ultrasons respectif (2) est relié pour la transmission de données à une unité de saisie de données (9) pour transmettre pendant un fonctionnement de l'échangeur de chaleur (1) des données de mesure à l'unité de saisie de données électronique (9), **caractérisé en ce qu'**un dispositif d'émission d'un signal ultrasonore pouvant être émis par le capteur à ultrasons respectif (2) est disposé transversalement, en particulier pour l'essentiel de façon orthogonale, par rapport à une extension longitudinale du tube de transmission de chaleur (3).

2. Echangeur de chaleur (1) selon la revendication 1, **caractérisé en ce que** l'échangeur de chaleur (1) comporte une chambre à fluide (4) pour loger le deuxième fluide (F2), sachant que les tubes de transmission de chaleur (3) passent à l'intérieur de la chambre à fluide (4), sachant que l'unité de saisie de données électronique (9) est disposée à l'extérieur de la chambre à fluide (4).

3. Echangeur de chaleur (1) selon la revendication 1 ou 2, **caractérisé en ce que** le capteur à ultrasons respectif (2) est relié pour la transmission de données par le biais d'une ligne de signalisation (8) à l'unité de saisie de données (9), sachant que la ligne de signalisation (8) passe au moins par endroits à l'intérieur d'un tube de protection (11), de préférence formé en métal, pour protéger la ligne de signalisation.

4. Echangeur de chaleur (1) selon la revendication 2 et 3, **caractérisé en ce que** d'une part le tube de protection (11) est soudé au boîtier de capteur (22) du capteur à ultrasons respectif (2) et/ou d'autre part le tube de protection (11) est raccordé à un passage de ligne de signalisation (10), de préférence au moyen d'une liaison par vis à coin, avec laquelle la ligne de signalisation (8) est passée à travers une paroi de chambre à fluide de la chambre à fluide (4).

5. Echangeur de chaleur (1) selon la revendication 3 ou 4, **caractérisé en ce que** le tube de protection (11) définit en fonctionnement un volume séparé du premier fluide (F1) et deuxième fluide (F2) à l'intérieur duquel passe la ligne de signalisation.

6. Echangeur de chaleur (1) selon l'une quelconque des revendications 1 à 5, **caractérisé en ce que** le capteur à ultrasons respectif (2) comprend un élément d'amortissement (17), un cristal piézoélectrique (18) et un corps de section préliminaire (19), lesquels sont comprimés l'un contre l'autre au moyen d'un élément faisant ressort (21).

7. Echangeur de chaleur (1) selon la revendication 6, **caractérisé en ce que** l'élément faisant ressort (21) est formé d'un agencement de plusieurs ressorts, de préférence en montage en série.

8. Echangeur de chaleur (1) selon la revendication 6 ou 7, **caractérisé en ce que** pour le capteur à ultrasons respectif (2), l'élément d'amortissement (17) est disposé entre une électrode de commande électrique et le cristal piézoélectrique (18), sachant que l'élément d'amortissement (17) est constitué électroconducteur de telle manière qu'une commande électrique du cristal piézoélectrique (18) peut être déplacé par le biais de l'électrode de commande à travers l'élément d'amortissement (17).

9. Echangeur de chaleur (1) selon l'une quelconque des revendications 1 à 8, **caractérisé en ce que** le capteur à ultrasons respectif (2), comporte un ou plusieurs éléments d'isolation électriques pour l'isolation électrique de préférence formés avec du dioxyde de zirconium entre un boîtier de capteur (22) du capteur à ultrasons (2) et respectivement un cristal piézoélectrique (18) et/ou un élément d'amortissement (17) et/ou une électrode du capteur à ultrasons.

10. Echangeur de chaleur (1) selon l'une quelconque des revendications 1 à 9, **caractérisé en ce qu'**un moyen de couplage formé d'argent, en particulier d'une feuille d'argent, ou d'aucun moyen de couplage, est disposé entre le capteur à ultrasons respectif (2) et le tube de transmission de chaleur (3).

11. Echangeur de chaleur (1) selon l'une quelconque des revendications 1 à 10, **caractérisé en ce que** le capteur à ultrasons respectif (2) est relié par conformité de force au tube de transmission de chaleur (3) respectif, de préférence avec une liaison par serrage.

12. Echangeur de chaleur (1) selon l'une quelconque des revendications 1 à 11, **caractérisé en ce que** plusieurs capteurs à ultrasons (2) sont reliés pour la transmission de données à la même unité de saisie de données électronique (9) pour transmettre pendant un fonctionnement de l'échangeur de chaleur (1) des données de mesure à l'unité de saisie de données (9).

13. Procédé destiné à faire fonctionner un échangeur de chaleur (1), en particulier un échangeur de chaleur (1) selon l'une quelconque des revendications 1 à 12, **caractérisé en ce que** sur un ou plusieurs tubes de transmission de chaleur (3) avec lesquels un premier fluide (F1) est transporté pour transmettre de la chaleur entre le premier fluide (F1) et un deuxième fluide (F2) par le biais des tubes de transmission de chaleur (3), un capteur à ultrasons (2) est respectivement disposé pour une pression d'utilisation de plus de 30 bars et/ou une température d'utilisation de plus de 80°C de telle manière qu'un sens d'émission d'un signal ultrasonore pouvant être émis par le capteur à ultrasons respectif (2) est transversal, en particulier pour l'essentiel orthogonal par rapport à une extension longitudinale du tube de transmission de chaleur (3), sachant qu'avec le capteur à ultrasons respectif (2) une épaisseur de paroi tubulaire du tube de transmission de chaleur (3), est respectivement déterminée in situ, sachant que les données de mesure sont transmises à une unité de saisie de données électronique (9) par le capteur à ultrasons respectif (2) pendant un fonctionnement de l'échangeur de chaleur (1).

14. Procédé selon la revendication 13, **caractérisé en ce que** le capteur à ultrasons respectif (2) est utilisé avec une fréquence, en particulier une fréquence moyenne, de plus de 10 MHz, en particulier entre 10 MHz et 30 MHz.

15. Procédé selon la revendication 13 ou 14, **caractérisé en ce que** pour la compensation de température d'une vitesse ultrasonique du signal ultrasonore, une épaisseur du corps de section préliminaire (19) d'au moins un des capteurs à ultrasons (2) est utilisée en tant que longueur de référence et/ou une température est déterminée avec au moins un thermocouple.
